# EUROPÄISCHE PATENTSCHRIFT

(11) **EP 2 475 244 B1**
(45) Veröffentlichungstag und Bekanntmachung des Hinweises auf die Patenterteilung: **16.04.2014**
(21) Anmeldenummer: 10751567.8
(22) Anmeldetag: 27.08.2010
(51) Int. Cl.: G01F 15/08, A01J 5/01

(54) **VERFAHREN UND VORRICHTUNG ZUR MENGENBESTIMMUNG BEI DER ÜBERFÜHRUNG EINER FLÜSSIGKEIT**
METHOD AND DEVICE FOR DETERMINING THE AMOUNT OF TRANSPORTED LIQUID
PROCÉDÉ ET DISPOSITIF POUR DÉTERMINER LA QUANTITÉ LORS DU TRANSFERT D'UN LIQUIDE

(30) Priorität: 08.09.2009 DE 102009040345; 15.09.2009 DE 102009041571
(43) Veröffentlichungstag der Anmeldung: 18.07.2012
(73) Patentinhaber: Schwarte Jansky GmbH, 48282 Emsdetten (DE)
(72) Erfinder: DÜNING, Lothar, 35418 Buseck (DE); LEICHSENRING, Detlef, 31840 Hessisch Oldendorf (DE); BARLIAN, Reinhold, 86825 Bad Wörishofen (DE)
(74) Vertreter: Hauck Patent- und Rechtsanwälte
(86) Internationale Anmeldenummer: PCT/EP2010/005266
(87) Internationale Veröffentlichungsnummer: WO 2011/029532

(56) Entgegenhaltungen:
- WO-A1-95/10028
- WO-A1-2008/141664
- DE-C1- 19 710 296

## Beschreibung

### TECHNISCHES GEBIET

Die Erfindung betrifft ein Verfahren zur Mengenbestimmung bei der Überführung einer Flüssigkeit, insbesondere von Milch, und hier insbesondere im Zuge der Überführung dieser Milch aus einem Bereitstellungsbehälter eines Lieferanten in einen Sammeltank eines Transportfahrzeuges, beispielsweise einer Molkerei, gemäß dem Oberbegriff des Anspruchs 1. Bei einem derartigen Verfahren ist vorgesehen, dass die Flüssigkeit an einer Zulauföffnung in eine Messleitung eingeleitet wird und an einer Auslauföffnung aus der Messleitung ausgeleitet wird, und eine durch die Messleitung strömende Flüssigkeitsmenge mittels einer der Messleitung zugeordneten Durchfluss-Messeinrichtung bestimmt wird, wobei zum Entgasen der in der Messleitung strömenden Flüssigkeit vor Erreichen der Durchfluss-Messeinrichtung eine Entgasungsanordnung vorgesehen ist.

Die Erfindung betrifft weiterhin eine Vorrichtung zur Mengenbestimmung bei der Überführung einer Flüssigkeit, insbesondere zum Durchführen des erfindungsgemäßen Verfahrens, gemäß dem Oberbegriff des Anspruchs 24, mit einer Messleitung, die an ihrem einen Ende eine Zulauföffnung und an ihrem anderen Ende eine Auslauföffnung für die Flüssigkeit aufweist, einer der Messleitung zugeordneten Durchfluss-Messeinrichtung zum Messen einer durch die Messleitung strömenden Flüssigkeitsmenge und einer oberstromig der Durchfluss-Messeinrichtung angeordneten Entgasungsanordnung zum Entgasen der in der Messleitung strömenden Flüssigkeit.

### STAND DER TECHNIK

Ein gattungsgemäßes Verfahren und eine gattungsgemäße Vorrichtung sind beispielsweise in der DE 38 37 765 A1 (SCHWARTE) offenbart. Diese Druckschrift beschreibt zwei unterschiedliche Verfahrensweisen zur Mengenbestimmung bei der Überführung einer Flüssigkeit, insbesondere Milch, die jedoch einem gemeinsamen Wirkungsprinzip unterzuordnen sind. Dieses Wirkungsprinzip besteht darin, dass der nicht von Flüssigkeit erfüllte Kopfraum der Entgasungsanordnung, dort Luftabscheider genannt, die Kopplung des in die Entgasungsanordnung eintretenden und austretenden Volumenstromes übernimmt.

Für den Fall, dass der Entgasungsanordnung über eine Fördereinrichtung Flüssigkeit zugeführt wird, - man spricht in diesem Fall von einem sog. Pumpensystem - fördert der Kopfraum durch Überdruckbildung gegenüber dem Zielort für die Flüssigkeit letztere aus der Entgasungsanordnung heraus. Ist im anderen Falle eine Fördereinrichtung der Entgasungsanordnung unterstromig nachgeschaltet, - man spricht in diesem Falle von einem sog. Vakuumsystem - dann fällt dem Kopfraum die Aufgabe zu, durch Unterdruckbildung gegenüber dem Herkunftsort der Flüssigkeit letztere in die Entgasungsanordnung hineinzufördern. Ein Pumpensystem ist z.B. in der DE 24 37 306 B1 (JANSKY) und der DE 34 40 092 A1 (TUCHEN-HAGEN) beschrieben.

Bei beiden Annahmesystemen, dem Pumpen- oder dem Vakuumsystem, dient die in der Messleitung angeordnete Entgasungsanordnung dazu, Verfälschungen des Messergebnisses der Durchfluss-Messeinrichtung entgegenzuwirken, die durch Gaseinschlüsse entstehen können, welche unter bestimmten Betriebs- und Überführungsbedingungen des Annahmesystems in der zu überführenden Flüssigkeit enthalten sind. Es besteht in beiden Fällen eine Wechselbeziehung zwischen dem Volumen des Kopfraumes und dem sich darin ausbildenden Druck, und es ist die Änderung des Füllstandes in der Entgasungsanordnung, die Aufschluss darüber gibt, wie sich der in die Entgasungsanordnung eintretende und aus diesem austretende Volumenstrom zueinander verhalten. Daher wird bei allen bekannten Verfahren die Förderleistung der Entgasungsanordnung über deren Füllstand geregelt.

Beim Pumpensystem wird der Überdruck im Kopfraum der Entgasungsanordnung über ein an den Kopfraum angeschlossenes Ent- und ggf. Belüftungsventil in Verbindung mit der oberstromig der Entgasungsanordnung angeordneten Fördereinrichtung gesteuert, während beim Vakuumsystem der Unterdruck im Kopfraum über eine an diesen wahlweise anschließbare Unterdruckquelle (z.B. Flüssigkeitsringpumpe, Ejektoren) erzeugt wird. Bei beiden Annahmesystemen mündet die Messleitung in Form einer Zulaufleitung in den Kopfraum der Entgasungsanordnung ein und sie tritt in Form einer Ablaufleitung aus dem Bodenbereich derselben aus.

Da bereits seit Jahrzehnten beim gattungsgemäßen Verfahren und der gattungsgemäßen Vorrichtung die gesamte zu überführende Flüssigkeit ausschließlich über die Entgasungsanordnung geführt wird, stellt letztere bislang immer ein die Überführungsleistung entscheidend limitierendes Bauteil des jeweiligen Annahmesystems dar. Die aus dem Stand der Technik bekannten Entgasungsanordnungen, die eine Eignung im Rahmen des gattungsgemäßen Verfahrens und der gattungsgemäßen Vorrichtung besitzen (z.B. DE 24 37 306 B1 (JANSKY); DE 26 37 026 A1 (SCHWARTE); EP 00 44 929 A1 (SCHWARTE); DE 30 40 670 A1 (AHRENS & BODE); DE 34 30 301 A1 (EISMANN); DE 34 31 176 A1 (EISMANN); DE 34 40 310 A1 (TUCHENHAGEN); DE 35 05 466 C1 (TUCHENHAGEN); DE 38 37 765 A1 (SCHWARTE-WERK); DE 39 09 578 A1 (SCHWARTE-WERK)), scheiden die Gaseinschlüsse in der zu überführenden Flüssigkeit über die freie Oberfläche einer jeweiligen Teilmenge aus dieser Flüssigkeit ab, die hierzu eine hinreichend lange Zeit in der Entgasungsanordnung verweilen muss und dort aufgrund des Gasblasenauftriebs und/oder durch die Fliehkraft einer tangentialen Geschwindigkeitskomponente einer Rotationsströmung entgast. Diese sog. Verweilzeit τ ergibt sich aus dem Verhältnis des flüssigkeitserfüllten Volumens V der Entgasungsanordnung und der angestrebten oder geforderten Überführungsleistung Q des Annahmesystems mit τ = V/Q. Daraus wird ersichtlich, dass mit steigender Überführungsleistung Q das erforderliche Volumen V der Entgasungsanordnung gleichfalls ansteigen muss. Somit muss in der Praxis entweder die Überführungsleistung Q begrenzt werden oder eine vergleichsweise schwere und voluminöse Entgasungsanordnung (insbesondere ein Entgasungsbehälter mit relativ großem Volumen V) gewählt werden, was insbesondere bei Tankfahrzeugen unerwünscht ist. Die Entgasungsanordnung entscheidet dabei nicht, ob eine Entgasung überhaupt notwendig ist; sie unterzieht gasanteilsfreie Flüssigkeit der gleichen Verweilzeit τ wie entgasungsbedürftige Flüssigkeit.

Um die Entgasungsanordnung in ihrer die Überführungsleistung limitierenden Funktion wenigstens zeitweise außer Kraft zu setzen, wurde im Rahmen des gattungsgemäßen Verfahrens und der gattungsgemäßen Vorrichtung vorgeschlagen (DE 195 40 884 C2 (HAAR)), den Gasanteil der durch die Messstrecke strömenden Flüssigkeit permanent oder in Zeitabständen zu erfassen. Ferner wird in Abhängigkeit von der Abweichung des erfassten Gasanteils von einem zulässigen Wert der Volumenstrom der Flüssigkeit in dem Sinne beeinflusst, dass er bei überhöhtem Gasanteil zumindest so weit reduziert wird, bis der Gasanteil der Flüssigkeit den zulässigen Wert erreicht. Umgekehrt kann bei einem Gasanteil unterhalb des zulässigen Wertes der Volumenstrom so weit erhöht werden, bis der Gasanteil den zulässigen Wert annimmt. Hierbei macht die Erfindung von der Erkenntnis Gebrauch, dass signifikante Gaseinschlüsse bei der Überführung einer Flüssigkeit regelmäßig lediglich zeitweise auftreten, und zwar insbesondere zu Beginn des Überführungsvorganges, aufgrund des noch unvollständigen Ansaugvorganges u.a. durch sog. "Entlüften" der Vorrichtung bis hinein in die Entgasungsanordnung, und/oder zum Ende des Überführungsvorganges, aufgrund des Leersaugens der Vorrichtung bis zum Eintritt in die Entgasungsanordnung und dem dortigen Absenken des Flüssigkeitsniveaus auf ein Abschaltniveau im Zuge der Mengenabgrenzung gegenüber dem vorherigen und dem nachfolgenden Lieferanten. Daneben können auch zufällige und außerplanmäßige Gaseinträge auftreten, die beispielsweise durch undichte Kupplungen, defekte Schläuche und Armaturen oder bewusste Manipulationen generiert werden.

Es sind weiterhin ein Messverfahren und eine Vorrichtung zur Mengenerfassung bei der Milchannahme mit mobilen oder stationären Annahmesystemen bekannt (DE 197 10 296 C1 (SCHWARTE-WERK), die eine Flüssigkeitsmengenbestimmung mit verringertem Volumen der Entgasungsanordnung ermöglichen. Dies gelingt, in dem nur ein Teil der Milchströmung entgast wird. Der verbleibende Hauptstrom wird hingegen nicht entgast. Statt dessen wird die Erkenntnis genutzt, dass die Schallgeschwindigkeit von Ultraschall-Impulsen in einem Luft/Milch-Gemisch eine andere ist als in entlüfteter Milch. Durch die Aufteilung der Strömung in einen Haupt- und einen Nebenstrom wird die Möglichkeit geschaffen, den Nebenstrom, der so klein gehalten werden kann, dass eine Referenzmessung in entlüfteter Milch noch möglich ist, von Luftbeimengungen zu befreien, so dass bei Durchschallung des Haupt- und des Nebenstromes ein signifikantes Signal einerseits für ein ggf. vorliegendes Milch/Luft-Gemisch und andererseits ein Referenzsignal für entlüftete Milch vorliegt. Aus den gewonnenen Signalen kann fortlaufend ein aktueller Milchanteil im Hauptstrom berechnet und daraus in einer zur Überführung der gesamten Milchmenge erforderlichen Annahmezeit das die Messanordnung insgesamt durchsetzende Milchvolumen der überführten Milchmenge (reine flüssige Phase) ermittelt werden.

Aus der DE 10 2005 005 295 A1 (BARTEC) ist ein Verfahren zur Fördermengenerfassung bekannt, das in einer einzigen Überführungsleitung, die auch als Messleitung fungiert, auf die Anordnung einer Entgasungsanordnung und somit auf die Abscheidung der Gasanteile aus der zu überführenden Flüssigkeit gänzlich verzichtet. Die Gasanteile werden vielmehr mittels einer Füllgradmesseinrichtung erfasst und bei der Fördermengenberechnung mit eingerechnet. Dieses Verfahren stellt vergleichsweise hohe Anforderungen an die Genauigkeit der Füllgradmesseinrichtung.

Aus der WO 2008/141 664 A1 (BARTEC) sind ein Verfahren und eine Vorrichtung zur Mengenbestimmung bei der Übergabe einer Flüssigkeit, insbesondere von Milch, bekann, die von den Merkmalen des gattungsgemäßen Verfahrens und der gattungsgemäßen Vorrichtung Gebrauch machen. Der dort vorgeschlagenen Lösung liegt die an sich bekannte, vorstehend bereits erwähnte Erkenntnis zugrunde, dass signifikante Gaseinschlüsse bei der Übergabe einer Flüssigkeit, und hier insbesondere bei größeren Abgabemengen, bei denen die Start- und Abschlussvorgänge in den Hintergrund treten, häufig lediglich zeitweise auftreten. Dem tragen das bekannte Verfahren und die Vorrichtung zu seiner Durchführung dadurch Rechnung, dass beim Normalbetrieb, wenn also keine nennenswerte Gasbelastung vorliegt, die Flüssigkeitsströmung an der Entgasungsanordnung vorbei geleitet wird. Gemäß dem Verfahren wird dies dadurch erreicht, dass die in der Messleitung befindliche Flüssigkeit diskontinuierlich einer Entgasungsanordnung zugeführt wird. Die Vorrichtung zur Durchführung des Verfahrens sieht diesbezüglich vor, dass ein Zwischenspeicher vorgesehen ist, der zwischen der Zulauföffnung und der Durchfluss-Messeinrichtung, insbesondere in einem Rohrleitungsbereich der Messleitung, von der Messleitung abzweigt, und dass eine Einrichtung zum Erzeugen eines Unterdruckes in dem Zwischenspeicher vorgesehen ist, mittels dem ein Flüssigkeitsvolumen aus der Messleitung in den Zwischenspeicher überführbar ist.

Das bekannte Verfahren und die Vorrichtung zu seiner Durchführung lösen das in Rede stehende Problem, nämlich die Limitierung der Überführungsleistung durch die Entgasungsanordnung zu beseitigen, befriedigend nur unter sehr speziellen Überführungsverhältnissen und ansonsten nur scheinbar. Allenfalls in langen zeitlichen Phasen, in denen keine Gasbeladung vorliegt, verliert die Entgasungsanordnung ihre limitierende Eigenschaft hinsichtlich der Überführungsleistung für das Überführungssystem insgesamt. Dieser unstreitige Gewinn wird jedoch in diesem Falle bereits teilweise durch die stets notwendige diskontinuierliche Betriebsweise zum Beginn und zum Ende der Überführung und ggf. bei einem zwischenzeitlichen Störfall zunichte gemacht. Zumindest zum Beginn und zum Ende der Überführung wird die Strömung in der zur Durchfluss-Messeinrichtung führenden Messleitung vollständig unterbrochen, die zu entgasende Flüssigkeit wird anschließend von der Messleitung in eine quasi "Sackgasse" mit Speicher- und Entgasungsfunktion abgezweigt, die Flüssigkeit verweilt dort über die Dauer ihrer Entgasung und sie wird anschließend auf dem umgekehrten Strömungsweg in die Messleitung zurückgeführt.

Je kürzer die kontinuierlichen Phasen sind, in denen keine nennenswerte Gasbeladung vorliegt, umso mehr schlagen, zeitlich gesehen, die die jeweilige kontinuierliche Phase beiderseits flankierenden, zwingend zu durchlaufenden diskontinuierlichen Phasen der Überführung zu Buche. So sind im breiten Spektrum der möglichen Überführungsverhältnisse durchaus Betriebsverhältnisse gegeben, bei denen durch das vorgeschlagene Verfahren, insgesamt gesehen, keine Steigerung der Überführungsleistung und damit keine Verkürzung der Überführungszeit für eine bestimmte zu überführende Flüssigkeitsmenge gegenüber bekannten, gattungsgemäßen Verfahren gegeben ist. Durch die diskontinuierliche Betriebsweise der Entgasungsanordnung, die sich möglicherweise noch durch dadurch bedingte strömungstechnisch ungünstige Ein- und Ausströmvorgänge in ihrer Wirkungsweise verschlechtert, wird vielmehr die maximal mögliche Überführungsleistung der bekannten Entgasungsanordnungen noch nicht einmal voll ausgeschöpft.

Aus der gegenüber dem Anmeldungsgegenstand nachveröffentlichten Druckschrift DE 10 2008 061 361 A1 ist eine Vorrichtung zur Annahme leichtflüchtiger Flüssigkeiten bekannt, insbesondere zur Alkoholannahme aus einem Tankwagen mit einem Entgasungsbehälter, in den der Alkohol aus dem Tankwagen geleitet wird. Der Entgasungsbehälter weist einen Alkoholeinlass und einen Alkoholauslass auf, die im unteren Bereich des Entgasungsbehälters angeordnet sind. Der Alkoholeinlass ist mit einer Zuleitung verbunden, die eine Bypassleitung umfasst. Die Bypassleitung ist vorzugsweise mit einer vom Alkoholauslass des Entgasungsbehälters fortgeführten Ableitung verbunden. Die Bypassleitung tritt dann in Funktion, wenn das Alkoholniveau am Tankwagen am Ende der Befüllung absinkt und der Füllstand im Entgasungsbehälter ein vorbestimmtes Niveau unterschreitet. Dieses vorbestimmte Niveau ist jedenfalls immer dann erreicht, wenn das Alkoholniveau im Tankwagen auf oder unterhalb der Höhe des Alkoholeinlasses liegt, so dass der Entgasungsbehälter dann nicht mehr befüllt werden kann. In diesem Betriebszustand wird der Alkohol in der Bypassleitung, die tiefer als der Entgasungsbehälter liegt, am Entgasungsbehälter vorbei insbesondere in die Ableitung des Entgasungsbehälters abgeleitet bzw. abgepumpt.

Es ist Aufgabe der vorliegenden Erfindung, bei einem gattungsgemäßen Verfahren und einer gattungsgemäßen Vorrichtung zur Mengenbestimmung bei der Überführung einer Flüssigkeit, insbesondere von Milch, sicherzustellen, dass bei hoher Überführungsleistung durch die Messleitung die Entgasungsanordnung ihre die Überführungsleistung limitierende Funktion verliert und dabei eine zuverlässige und genaue Mengenbestimmung der überführten Flüssigkeit gegeben ist.

### ZUSAMMENFASSUNG DER ERFINDUNG

Diese Aufgabe wird durch ein Verfahren mit den Merkmalen des Anspruchs 1 und eine Vorrichtung mit den Merkmalen des Anspruchs 24 gelöst. Bevorzugte Ausführungsformen sind in den jeweils abhängigen Ansprüchen angegeben.

Der erste erfinderische Grundgedanke besteht darin, dass die Entgasungsanordnung über die gesamte Zeitdauer der Überführung stets und unter allen Überführungsbedingungen beaufschlagt wird. Die maximal mögliche Entgasungsleistung der Entgasungsanordnung, aber auch jede Entgasungsleistung darunter, steht damit, wenn diese steuerungstechnisch erwünscht und aufgrund der Überführungsbedingungen abrufbar ist, kontinuierlich zur Verfügung.

Der zweite erfinderische Grundgedanke sieht vor, dass die Notwendigkeit, die zu überführende Flüssigkeit beispielsweise längs einer vorgegebenen, zulässigen Eichfehlergrenze zu entgasen, oberstromig der Entgasungsanordnung fortwährend mittels einer Gasblasen-Erfassungseinrichtung festgestellt wird. Immer dann, wenn kein Bedarf oder keine Notwendigkeit zur Entgasung der zu überführenden Flüssigkeit besteht, kann die zu überführende Flüssigkeit vor Erreichen der Entgasungsanordnung in wenigstens zwei Fluidströme aufgeteilt und verzweigt werden. Der nicht der Entgasungsanordnung zugeführte wenigstens eine Teilstrom der zu überführenden Flüssigkeit wird alsdann an der Entgasungsanordnung vorbeigeführt und unterstromig der Entgasungsanordnung mit dem aus dieser austretenden Teilstrom zusammengeführt und die zu einem Gesamtstrom zusammengeführte Flüssigkeit wird der Durchfluss-Messeinrichtung zugeführt.

Dies ist keine unabdingbare Vorgehensweise, denn es kann eine Überführungssituation vorliegen, bei der die Entgasungsanordnung aufgrund der ihr innewohnenden maximalen Überführungsleistung die erforderliche Überführungsleistung allein aufbringt. In allen anderen Fällen kann bei fortwährender Inanspruchnahme der Überführungsleistung der Entgasungsanordnung zeitgleich und parallel die Überführungsleistung der an der Entgasungsanordnung vorbeigeführten Fluidströmung genutzt werden, die problemlos mehrfach größer als die Überführungsleistung der Entgasungsanordnung ausgelegt werden kann.

Dabei kann sich die im Bypass zur Entgasungsanordnung geführte Fluidströmung auf mehr als einen Fluidstrom verteilen, wobei diese Fluidströme gleich oder unterschiedlich groß sein können, parallel zueinander geführt werden, aus einer gemeinsamen Verzweigungsstelle als Quelle generiert werden oder jedem Fluidstrom eine eigene Verzweigungsstelle zugeordnet ist und die Zusammenführung mit dem aus der Entgasungsanordnung austretenden Fluidstrom an der/den Vereinigungsstelle/n sinngemäß in umgekehrter Weise erfolgt.

Die Vorteile einer derartigen Verfahrensweise sind offenkundig. Sie sind, neben dem Aspekt, über die gesamte Zeitdauer der Überführung eine höchstmögliche Überführungsleistung generieren zu können, insbesondere darin zu sehen, dass die Überführung der Flüssigkeit in der Messleitung zu keinem Zeitpunkt unterbrochen werden muss, da stets und kontinuierlich über die gesamte Zeitdauer der Überführung wenigstens die Überführungsleistung der Entgasungsanordnung zur Verfügung steht.

Gegenüber dem bekannten Verfahren, bei dem die in der Messleitung befindliche Flüssigkeit diskontinuierlich der Entgasungsanordnung zugeführt wird, d.h. bei dem die Flüssigkeit in die Entgasungsanordnung hinein- und nach der Entgasung auf dem selben Weg wieder herausgeführt wird, verkürzen sich beim erfindungsgemäßen Verfahren, bei dem keine strömungstechnische Umsteuerung der Flüssigkeit in der Entgasungsanordnung erfolgt, sondern vielmehr ein fortwährendes, kontinuierliches Hindurchleiten, die Schalt- und Steuerzeiten deutlich. Kürzere Überführungszeiten, insbesondere zum Beginn und zum Ende der Überführung, aber auch beim Auftreten von Störungszuständen, wenn die Entgasungsleistung der Entgasungsanordnung voll gefordert wird, führen zu einer Verkürzung der Zeitdauer der gesamten Überführung und damit zu einer Steigerung der Überführungsleistung insgesamt gegenüber bekannten Verfahren.

Nach einer Ausgestaltung des Verfahrens gemäß der Erfindung wird die Notwendigkeit, die zu überführende Flüssigkeit nicht zu entgasen und damit nicht in der Entgasungsanordnung zu behandeln, dann gesehen, wenn keine Gasblasen in der Flüssigkeit vorhanden bzw. detektierbar sind oder wenn Flüssigkeit mit einem Gasanteil unterhalb eines vorher bestimmten Wertes oder gleich dem vorher bestimmten Wert vorliegt (kurz: Gasanteil ist gleich dem vorher bestimmten Wert oder kleiner als dieser Wert).

In beiden Fällen wird weiterhin vorgeschlagen, die gewonnene Information, nämlich im ersten Fall das Vorhandensein oder das Nichtvorhandensein von Gasblasen (qualitative Erfassung) in der zu überführenden Flüssigkeit und im zweiten Fall den ermittelten, d.h. im Regelfall den gemessenen Gasanteil (quantitative Erfassung) in der zu überführenden Flüssigkeit, jeweils zur Steuerung der Aufteilung und Verzweigung dieser Flüssigkeit heranzuziehen.

Eine vorteilhafte Ausgestaltung des Verfahrens sieht weiter vor, dass oberstromig der Aufteilung und Verzweigung der zu überführenden Flüssigkeit die in dieser mitgeführten Gasblasen qualitativ und/oder quantitativ erfasst werden. Hierzu werden Gasblasensensoren neuer Prägung, die auch als Bubble-Sensoren bezeichnet werden, eingesetzt, die mit einer Auswerteelektronik in der Lage sind, entweder nur das Vorhandensein von Gasblasen qualitativ zu melden oder den in einer momentanen Flüssigkeitsströmung existierenden Gasanteil quantitativ zu bestimmen bzw. zu messen. Die Melde- oder Messsignale stehen dabei zweckmäßig auch als Steuersignale zur Verfügung.

Fortgeschrittene Sensoren neuerer Prägung liefern dabei nicht nur eine Messgröße in Form eines Betrages, sondern können auch gleichzeitig Aussagen über die Gasblasenverteilung in einem betrachteten Strömungsquerschnitt machen - ein Umstand, der im Rahmen einer mit der Überführung der Flüssigkeit oftmals einhergehenden repräsentativen Probenahme aus der zu überführenden Flüssigkeit vorteilhaft genutzt werden kann. Zu diesem Zweck sieht ein Vorschlag im Rahmen des erfindungsgemäßen Verfahrens vor, dass in der Messleitung oberstromig der Aufteilung und Verzweigung der zu überführenden Flüssigkeit der Anteil der in dieser mitgeführten Gasblasen zum Einen nach Betrag und zum Anderen nach Verteilung über den betrachteten Strömungsquerschnitt ermittelt wird und diese Informationen zur Gewinnung einer repräsentativen Probe aus der überführten Flüssigkeitsmenge herangezogen werden.

Eine vorteilhafte Ausgestaltung des Verfahrens sieht vor, dass die Entgasungsanordnung eine Durchsatzleistung bereitstellt, die unter den jeweiligen Überführungsbedingungen stets ihr mögliches Maximum ausschöpft. Diese Variante des Verfahrens unterscheidet sich damit nicht von dem üblichen bekannten, gattungsgemäßen Verfahren.

Für den Fall der erfindungsgemäßen Aufteilung und Verzweigung der zu überführenden Flüssigkeit sieht eine andere vorteilhafte Ausgestaltung des Verfahrens vor, dass die Entgasungsanordnung eine Durchsatzleistung bereitstellt, die unter den jeweiligen Überführungsbedingungen stets unterhalb ihrer maximal möglichen Durchsatzleistung liegt. Dadurch wird unter diesen Überführungsbedingungen, die an sich die Inanspruchnahme der Entgasungsanordnung überflüssig machen, weil keine Gasanteile abzuscheiden sind, die Möglichkeit geschaffen, die zu überführende Flüssigkeit im größtmöglichen Umfang und dabei mit der strömungstechnisch größtmöglichen, aber technologisch noch verträglichen Überführungsleistung an der Entgasungsanordnung vorbeizuführen und somit die Überführungsleistung insgesamt zu maximieren. Das Herunterfahren der Fluidströmung durch die Entgasungsanordnung erfolgt dabei stets nur so weit, dass die Betriebsbereitschaft der Entgasungsanordnung und ihre zur Aufnahme der vollen Überführungs- und Entgasungsleistung notwendige Dynamik nicht verloren geht.

Das erfindungsgemäße Verfahren ist sowohl im Rahmen eines sog. Vakuumsystems als auch eines sog. Pumpensystems anwendbar. Das Vakuumsystem zeichnet sich dabei im Wesentlichen dadurch aus, dass die Entgasungsanordnung einen nicht von Flüssigkeit erfüllten Kopfraum aufweist, der die aus der Entgasungsanordnung über eine erste Fördereinrichtung abgeführte Flüssigkeit mit einem Unterdruck gegenüber ihrem Herkunftsort in die Entgasungsanordnung hineinfördert, und dass im Falle der Aufteilung der zu überführenden Flüssigkeit die erste Fördereinrichtung die gesamte zu überführende und hinter der Entgasungsanordnung zusammengeführte Flüssigkeit zu ihrem Zielort fördert. Dabei werden über den Unterdruck im Kopfraum der in die Entgasungsanordnung ein- und austretende Fluidstrom gesteuert. Dieser Unterdruck wird in an sich bekannter Weise, wie dies vorgesehen ist, durch Evakuieren oder Begasen bzw. Belüften des Kopfraumes erzeugt.

Das Pumpensystem zeichnet sich dabei im Wesentlichen dadurch aus, dass die Entgasungsanordnung einen nicht von Flüssigkeit erfüllten Kopfraum aufweist, der die der Entgasungsanordnung über eine zweite Fördereinrichtung zugeführte Flüssigkeit mit einem Überdruck gegenüber dem Zielort für die Flüssigkeit aus der Entgasungsanordnung herausfördert, und dass im Falle der Aufteilung der zu überführenden Flüssigkeit die zweite Fördereinrichtung die gesamte zu überführende und vor der Entgasungsanordnung noch nicht aufgeteilte Flüssigkeit zu ihrem Zielort fördert. Dabei werden über den Überdruck im Kopfraum der in die Entgasungsanordnung ein- und austretende Fluidstrom gesteuert. Dieser Überdruck wird in an sich bekannter Weise, wie dies vorgesehen ist, durch Be- oder Entgasen bzw. Be- oder Entlüften des Kopfraumes erzeugt.

Die Aufteilung und Verzweigung der zu überführenden Flüssigkeit erfolgt, wie dies eine Ausgestaltung vorschlägt, in sehr einfacher Weise dadurch, dass eine die Entgasungsanordnung im Bereich der Messleitung überbrückende Fluidverbindung geöffnet wird, und dass die Aufteilung und Verzweigung endet, wenn die Fluidverbindung gesperrt wird.

Hinsichtlich des Größenverhältnisses der aufgeteilten und verzweigten Fluidströme sieht eine diesbezügliche Ausgestaltung des erfindungsgemäßen Verfahrens vor, dass dieses Verhältnis generell durch die die jeweilige Fluidverbindung kennzeichnenden Druckverlustbeiwerte bestimmt. Sind diese Druckverlustbeiwerte, wie dies die einfachste Lösung vorsieht, fest und damit unveränderlich vorgegeben, dann ist damit das Verhältnis der Fluidströme unter den jeweiligen Bedingungen der momentan verwirklichten Überführungsleistung festgelegt und von außen nicht veränderbar.

Ist, wie dies gleichfalls vorgesehen ist, wenigstens ein Druckverlustbeiwert in Grenzen veränderlich, so ist damit das Verhältnis der Fluidströme unter den jeweiligen Bedingungen der momentan verwirklichten Überführungsleistung von außen steuerbar und damit gleichfalls von außen veränderlich. In Verbindung mit zeitgleich und oberstromig der Verzweigung der Fluidströme gewonnenen Messwerten für den Gasanteil in der zu überführenden Flüssigkeit ist damit eine flexible Steuerung der Fluidströme möglich, die unter den jeweiligen Überführungsbedingungen die optimale, das ist im Regelfall die maximal mögliche Überführungsleistung findet und einstellt.

Die Abläufe des erfindungsgemäßen Verfahrens lassen sich noch optimaler steuern, wenn weitere, die momentanen Überführungsbedingungen kennzeichnenden Informationen zur Verfügung stehen. So wird vorgeschlagen, dass in der Messleitung ein Druck gemessen wird, und dass die in der Messleitung angeordnete Fördereinrichtung in Abhängigkeit des gemessenen Drucks gesteuert wird. Eine weitere Verbesserung der Steuerung stellt sich dann ein, wenn einem anderen Vorschlag gefolgt wird, der vorsieht, dass in der Messleitung ein Druck und /oder der Volumenstrom der zu überführenden Flüssigkeit und/oder die Drehzahl der in der Messleitung angeordneten Fördereinrichtung gemessen werden, und dass die Fördereinrichtung kennfeldabhängig vom gemessenen Druck und/oder dem Volumenstrom und/oder der gemessenen Drehzahl gesteuert wird.

Um die Steuerung noch weiter zu optimieren und insbesondere Kavitation zu vermeiden oder Kavitationsneigung frühzeitig zu erkennen, sieht eine weitere vorteilhafte Ausgestaltung des erfindungsgemäßen Verfahrens vor, dass ein Gasanteil der in der Messleitung zu überführenden Flüssigkeit gemessen wird, und dass die in der Messleitung angeordnete Fördereinrichtung in Abhängigkeit des gemessenen Gasanteils gesteuert wird.

Wird das Verfahren, wie dies weiterhin vorgeschlagen wird, derart ausgestaltet, dass ein Gasanteil der in der Messleitung zu überführenden Flüssigkeit unmittelbar unterstromig der Durchfluss-Messeinrichtung gemessen wird, dann lässt sich mit Blick auf die im Verlauf der Überführung der Flüssigkeit ermittelten Ergebnisse und Rückkopplung bzw. Rückführung dieser messtechnisch gewonnenen Informationen in den Bereich der vorg. Steuerung eine Regelung verwirklichen, die eine zuverlässige und genaue Mengenbestimmung, beispielsweise entlang einer vorgegebenen, zulässigen Eichfehlergrenze, ermöglicht. Diese genaue Mengenbestimmung ist dann gegeben, wenn, wie dies gleichfalls vorgesehen ist, der gemessene Gasanteil zur Korrektur von Messwerten der Durchfluss-Messeinrichtung herangezogen wird.

Die Messgenauigkeit wird gemäß einem weiteren Vorschlag dadurch weiter verbessert, dass die Temperatur und/oder der Druck und/oder die Geschwindigkeit oder der Volumenstrom der zu überführenden Flüssigkeit im Bereich der Durchfluss-Messeinrichtung ermittelt werden/wird und die Ergebnisse beim Berechnen der überführten Flüssigkeitsmenge herangezogen werden.

Während sich die vorg. Maßnahmen zur Verbesserung der Messgenauigkeit mit dem Istzustand der Gasblasen, wie er sich aus den vorliegenden Überführungsbedingungen einstellt, abfindet und diesen toleriert, verändert eine andere vorteilhafte Ausgestaltung des erfindungsgemäßen Verfahrens die volumenmäßige Ausprägung der Gasblasen. Bekanntlich erfassen und messen die üblicherweise verwendeten Durchfluss-Messeinrichtungen das Volumen der Blasen bzw. des Gasanteils und behandeln die gasförmige Phase wie die reine flüssige Phase, wodurch sich die in Rede stehenden Messfehler bei der Mengenbestimmung der zu überführenden Flüssigkeit, die es zu vermeiden oder wenigstens zu minimieren gilt, ergeben. Die diesbezügliche Ausgestaltung sieht vor, dass ein unterstromig der Durchfluss-Messeinrichtung in der Messleitung angeordneter Strömungsquerschnitt stufenlos oder in diskreten Stufen oder innerhalb diskreter Stufen stufenlos reduziert wird. Durch diese Reduzierung wird im Bereich der Durchfluss-Messeinrichtung in Verbindung mit einer angepassten oder sich einstellenden Förderleistung der Fördereinrichtung das Druckniveau der überführten und volumenmäßig erfassten Flüssigkeit, in der sich noch restliche Gasanteile befinden können, angehoben, wodurch die komprimierbaren Gasanteile eine entsprechende Volumenverkleinerung erfahren.

Die angestrebte hohe Dynamik des erfindungsgemäßen Verfahrens erfordert eine schnelle Aufteilung und Verzweigung der Fluidströme und eine ebenso schnelle Aufhebung dieser Maßnahme. Damit die Entgasungsanordnung beim zügigen Sperren der an ihr vorbeigeführten Fluidströmung, und insbesondere dann, wenn die Entgasungsanordnung volumenminimiert ausgelegt ist, eintrittsseitig nicht überflutet wird, wobei die vorstehend beschriebene Steuerungsfunktion der Entgasungsanordnung verlorenginge, sieht eine andere Ausgestaltung des Verfahrens gemäß der Erfindung vor, dass ein oberstromig der Entgasungsanordnung, insbesondere oberstromig der Aufteilung und Verzweigung der zu überführenden Flüssigkeit, angeordneter Strömungsquerschnitt stufenlos oder in diskreten Stufen oder innerhalb diskreter Stufen stufenlos reduziert wird.

Die erfindungsgemäße Vorrichtung ist bevorzugt zur Durchführung des erfindungsgemäßen Verfahrens ausgestaltet, wodurch sich die mit Blick auf das Verfahren erläuterten Vorteile erzielen lassen. Nach der Erfindung können die im Zusammenhang mit dem Verfahren dargestellten Merkmale auch auf die Vorrichtung Anwendung finden. Gleichfalls können die im Zusammenhang mit der Vorrichtung dargestellten Merkmale beim Verfahren Anwendung finden.

Eine gattungsgemäße Vorrichtung, die oberstromig der Durchfluss-Messeinrichtung eine Entgasungsanordnung zum Entgasen der in der Messleitung strömenden Flüssigkeit aufweist, ist insbesondere dadurch gekennzeichnet, dass sich die Messleitung oberstromig der Entgasungsanordnung in eine Zulaufleitung zur Entgasungsanordnung und wenigstens eine Bypass-Leitung verzweigt. Die wenigstens eine Bypass-Leitung ist an der Entgasungsanordnung vorbeigeführt und mit einer aus der Entgasungsanordnung austretenden Ablaufleitung zusammengeführt. Die wenigstens eine Bypass-Leitung und die Ablaufleitung bilden unterstromig ihrer Vereinigungsstelle einen Abschnitt der Messleitung, in dem die Durchfluss-Messeinrichtung angeordnet ist. In einem anderen Abschnitt der Messleitung, oberstromig der Verzweigungsstelle von Zulaufleitung und der wenigstens einen Bypass-Leitung, ist eine Gasblasen-Erfassungseinrichtung angeordnet, und in der Bypass-Leitung, unterstromig der Verzweigungsstelle und oberstromig der Vereinigungsstelle, ist jeweils ein Absperrventil vorgesehen.

Wenn es rohrleitungs- und steuerungstechnisch und mit Blick auf die erzielbare Überführungsleistung von Vorteil ist, werden mehrere, parallel geführte Bypass-Leitungen vorgesehen. Ihr Durchtrittsquerschnitt kann jeweils gleich oder unterschiedlich und in der Größe gestuft sein. Ihre Verzweigung kann sich aus einer einzigen Verzweigungsstelle oder aus entsprechend mehreren, voneinander getrennten Verzweigungsstellen generieren. Ihre Vereinigung erfolgt sinngemäß in umgekehrter Weise.

Die erfingdungsgemäß vorgesehene Gasblasen-Erfassungseinrichtung ist in ihrer einfachsten Ausgestaltung als qualitativ arbeitende Gasblasen-Meldeeinrichtung ausgebildet, die ein Steuersignal generiert. Hierdurch wird lediglich festgestellt, ob Gasanteile bzw. Gasblasen vorliegen oder nicht. In einer anderen, leistungsverbesserten Ausführung ist sie als quantitativ arbeitende erste Gasanteils-Messeinrichtung ausgebildet, die ein Mess- und/oder Steuersignal generiert. Hierdurch sind Steuerungs- und Regelungsverfahren optimal auszugestalten und die Mengenbestimmung der überführten Flüssigkeit ist sehr zuverlässig und sehr genau, beispielsweise entlang einer vorgegebenen, zulässigen Eichfehlergrenze, durchzuführen.

Es ist von Vorteil, weil dadurch nicht permanent durchströmte, Messfehler begünstigende Toträume vermieden werden, wenn nach einer bevorzugten Ausführungsform der vorgeschlagenen Vorrichtung das erste Absperrventil in unmittelbarer Nähe zur Verzweigungsstelle und das zweite Absperrventil in unmittelbarer Nähe zur Vereinigungsstelle angeordnet sind.

Die vorgeschlagene erfindungsgemäße Vorrichtung verwirklicht sich in ihren vorstehend und noch nachfolgend beschriebenen Ausgestaltungen im Rahmen eines sog. Vakuumsystems dadurch, dass die Zulaufleitung in einen Kopfraum der Entgasungsanordnung ein- und die Ablaufleitung aus einem Bodenbereich desselben ausmündet, dass in der Messleitung unterstromig der Vereinigungsstelle eine erste Fördereinrichtung angeordnet ist, und dass dem Kopfraum eine erste Druck-Steuereinrichtung zugeordnet ist, mittels derer im Kopfraum ein Unterdruck gegenüber dem Herkunftsort der zu überführenden Flüssigkeit erzeugbar ist und dieser Unterdruck die Flüssigkeit in die Entgasungsanordnung hineinfördert.

Die vorgeschlagene erfindungsgemäße Vorrichtung verwirklicht sich in ihren vorstehend und noch nachfolgend beschriebenen Ausgestaltungen im Rahmen eines sog. Pumpensystems dadurch, dass die Zulaufleitung in einen Kopfraum des Entgasungsbehälters ein- und die Ablaufleitung aus einem Bodenbereich desselben ausmündet, dass in der Messleitung oberstromig der Verzweigungsstelle eine zweite Fördereinrichtung angeordnet ist, und dass dem Kopfraum eine zweite Druck-Steuereinrichtung zugeordnet ist, mittels derer im Kopfraum ein Überdruck gegenüber dem Zielort der zu überführenden Flüssigkeit erzeugbar ist und dieser Überdruck die Flüssigkeit aus der Entgasungsanordnung herausfördert.

Die Zuverlässigkeit der erfindungsgemäßen Vorrichtung im Rahmen des Pumpensystems, und hier insbesondere die Zuverlässigkeit der Gasblasenerfassung, werden dadurch verbessert, dass die Gasblasen-Erfassungseinrichtung unterstromig der zweiten Fördereinrichtung angeordnet ist. Hierdurch werden vorhandene Gasanteile bzw. Gasblasen, wenigstens tendenziell, hinsichtlich ihre Größe homogenisiert und, in Bezug auf ihre Verteilung in einem betrachteten Strömungsquerschnitt, gleichverteilt.

Sofern in der Messleitung, oberstromig der Verzweigungsstelle, eine wahlweise schaltbare, veränderbare zweite Drosseleinrichtung angeordnet ist, lässt sich eine sehr schnelle, dynamische Unterbrechung der Fluidströmung in der Bypass-Leitung realisieren, ohne die Entgasungsanordnung mit der zu überführenden Flüssigkeit zu überfluten. Dies kann auf sehr einfache Weise beispielsweise durch ein Drosselventil in Form eines Scheibenventils mit einem gelochten, scheibenförmigen Schließglied als Drosselblende erfolgen.

Eine wahlweise und variable Veränderung des Verhältnisses der an der Verzweigungsstelle generierten Fluidströme ist nach einer bevorzugten Ausführungsform der erfindungsgemäßen Vorrichtung dadurch sehr einfach zu verwirklichen, dass in der Bypass-Leitung eine wahlweise schaltbare, veränderbare dritte Drosseleinrichtung, insbesondere ein Drosselventil mit stufenlos oder in diskreten Stufen oder innerhalb diskreter Stufen stufenlos veränderbarem Strömungsquerschnitt, angeordnet ist.

Zur Anhebung des Systemdruckes im Bereich der Durchfluss-Messeinrichtung zur Verringerung der Volumina der noch nicht abgeschiedenen Gasanteile bzw. Gasblasen ist gemäß einer Weiterbildung der erfindungsgemäßen Vorrichtung vorgesehen, dass in der Messleitung, unterstromig der Durchfluss-Messeinrichtung, eine wahlweise schaltbare, veränderbare erste Drosseleinrichtung angeordnet ist. Bei diesem Drosselventil kann es sich, wie dies vorgesehen ist, um ein solches handeln, das einen einzigen, stufenlos oder binär (auf/zu) oder in diskreten Stufen oder innerhalb diskreter Stufen stufenlos veränderbaren Strömungsquerschnitt aufweist.

Eine diesbezüglich besonders bevorzugte Weiterbildung der erfindungsgemäßen Vorrichtung besteht darin, dass das Drosselventil wenigstens zwei binär (auf/zu) schaltbare, parallele Strömungswege mit festen, unterschiedlich großen, in der Größe gestuften Strömungsquerschnitten aufweist. Bei zwei binär schaltbaren Strömungswegen ergeben sich bereits vier Schaltstellungen und in Verbindung mit in der Größe gestuften Strömungsquerschnitten drei von null verschiedene, unterschiedliche Durchflussquerschnitte insgesamt. Bei drei binär schaltbaren Strömungswegen sind es unter den genannten sonstigen Bedingungen bereits 7 von null verschiedene, unterschiedliche Durchflussquerschnitte insgesamt.

Ist, wie dies gleichfalls vorgeschlagen wird, parallel zu den schaltbaren Strömungswegen ein nicht schaltbarer Strömungsweg vorgesehen, dessen Strömungsquerschnitt kleiner als der kleinste schaltbare Strömungsquerschnitt ausgeführt ist, dann ergeben sich für drei binär schaltbare Strömungswege, die beispielsweise in DN25, DN32 und DN50 gestuft ausgeführt sind, und dem in DN16 ausgeführten, nicht schaltbaren Strömungsweg acht Schaltstellungen mit acht unterschiedlich großen Durchtrittsquerschnitten insgesamt, die einen Querschnittsbereich abdecken, der als bezogene Größe von 100 % für den größten Querschnitt und bis zu 5,8 % für den kleinsten Querschnitt reicht.

Die Bypass-Leitung wird in vorteilhafter Weise mit gasfreier Flüssigkeit befüllt, so dass eine Verfälschung der Messergebnisse der Durchfluss-Messeinrichtung, insbesondere bei der Inbetriebnahme der Bypass-Leitung, vermieden und ein Leerfahren der Bypass-Leitung im Zuge der Mengenabgrenzung zum Ende der Überführung ermöglicht wird, wenn, wie dies eine bevorzugte Ausführungsform der erfindungsgemäßen Vorrichtung vorsieht, von der Messleitung, unterstromig der jeweiligen Fördereinrichtung, insbesondere von deren Druckstutzen oder von einem diesem sich anschließenden Leitungsbereich, eine Füllleitung abzweigt, die in die Bypass-Leitung, oberstromig des zweiten Absperrventils, einmündet.

Eine bevorzugte Weiterbildung der erfindungsgemäßen Vorrichtung zeichnet sich dadurch aus, dass eine Steuereinrichtung vorgesehen ist, die zur Durchführung des Verfahrens nach einem der vorstehenden Ansprüche eingerichtet ist.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten verfahrens- und vorrichtungstechnischen Ausführungsformen realisiert ist, werden in der Zeichnung ein sog. Vakuumsystem und ein sog. Pumpensystem jeweils in einer bevorzugten Ausführungsform der vorgeschlagenen Vorrichtung dargestellt und nachfolgend nach Aufbau und Funktion beschrieben unter der Voraussetzung, dass diese Ausführungsformen nur jeweils ein Beispiel für die Erfindung darstellen, nicht aber die Erfindung auf diese speziell dargestellten Beispiele beschränkt ist. Es zeigen
- **Figur 1**: in einer stark schematisierten Darstellung die wesentlichen Elemente einer erfindungsgemäßen Vorrichtung zur Durchführung des erfindungsgemäßen Verfahrens, wobei sich die Darstellung auf jene Elemente beschränkt, die in einem Vakuumsystem oder in einem Pumpensystem gleichermaßen Verwendung finden;
- **Figur 2**: in einer gleichfalls stark schematisierten Darstellung eine bevorzugte Ausführungsform einer erfindungsgemäßen Vorrichtung zur Durchführung des erfindungsgemäßen Verfahrens im Rahmen eines Vakuumsystems und
- **Figur 3**: in einer gleichfalls stark schematisierten Darstellung eine bevorzugte Ausführungsform einer erfindungsgemäßen Vorrichtung zur Durchführung des erfindungsgemäßen Verfahrens im Rahmen eines Pumpensystems.

### DETAILLIERTE BESCHREIBUNG

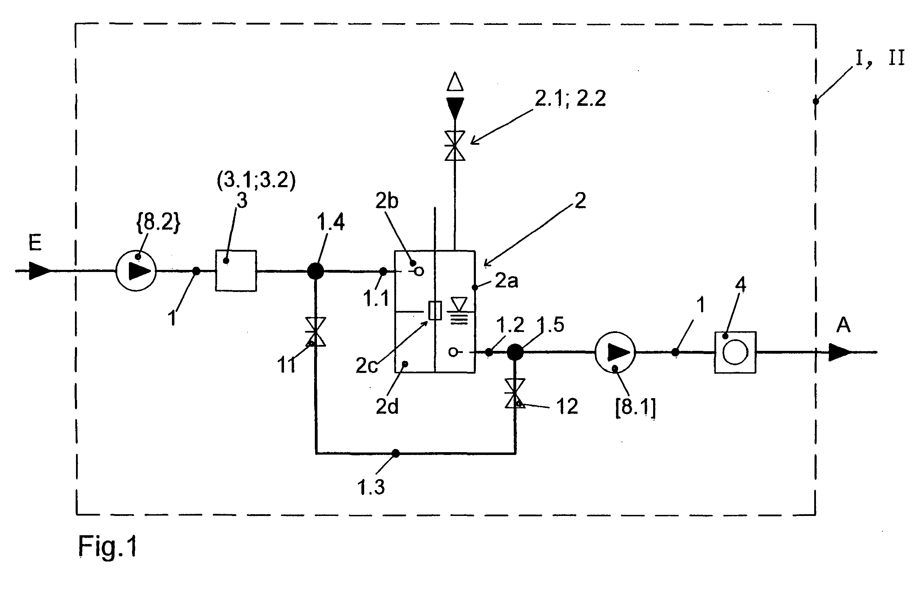

### Vakuumsystem und Pumpensystem (Figur 1)

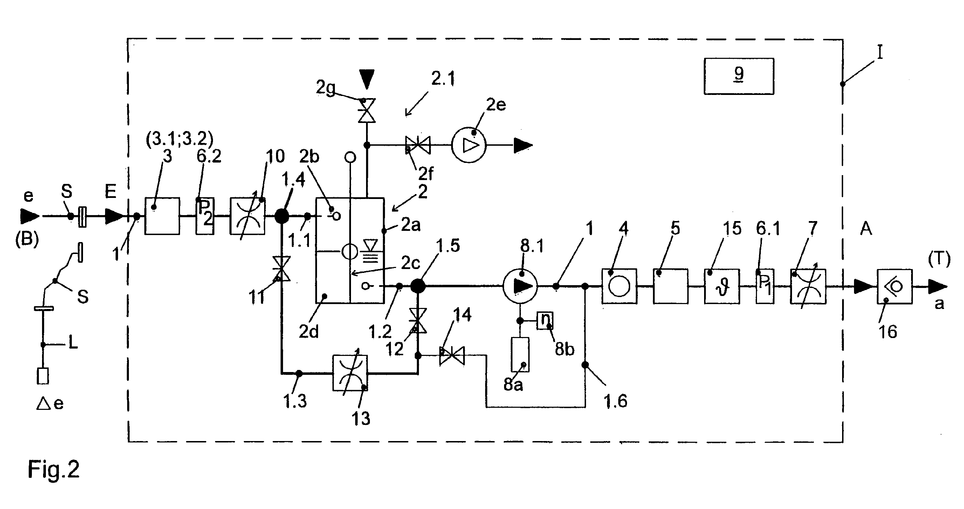

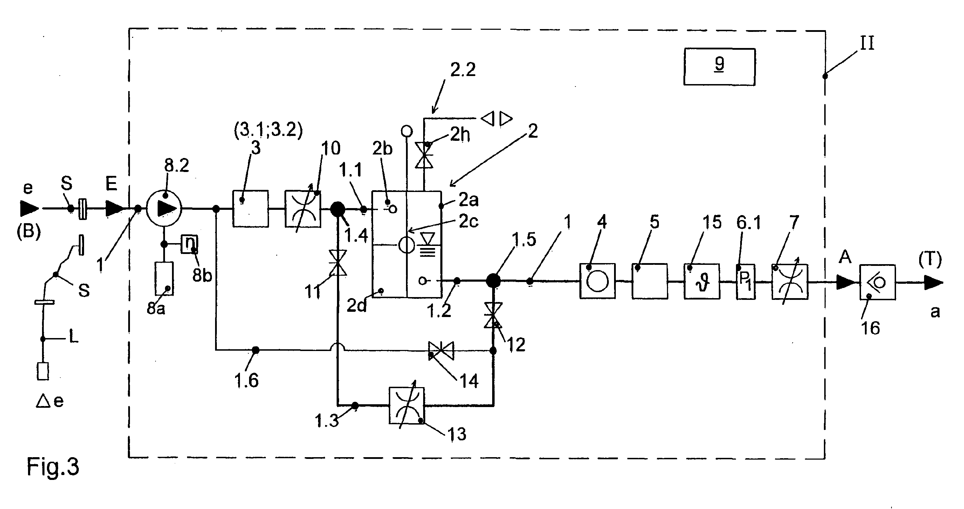

Gleiche und/oder gleichwirkende Elemente sind in den Figuren der Zeichnung mit denselben Bezugszeichen gekennzeichnet. Jene Elemente der erfindungsgemäßen Vorrichtung, die ein Vakuumsystem I (**Figur 2**) und ein Pumpensystem II (**Figur 3**) gleichermaßen kennzeichnen, sind in **Figur 1**, stellvertretend für beide Systeme I, II, dargestellt. Dabei beinhaltet **Figur 1** bereits alle erfindungswesentlichen Elemente der erfindungsgemäßen Vorrichtung, wobei nicht alle dargestellten Elemente die Erfindung ausmachen.

Eine Messleitung 1 (**Figur 1**), in deren Verlauf die zu überführende Flüssigkeit, insbesondere Milch, bei Bedarf entgast und volumenmäßig bestimmt wird, weist an ihrem einen Ende, bezogen auf die Zeichnungslage, dem linksseitigen, eine Zulauföffnung E und an ihrem anderen Ende, dem rechtsseitigen, eine Ablauföffnung A auf. Zum Messen der durch die Messleitung 1 strömenden Flüssigkeit ist eine Durchfluss-Messeinrichtung 4 vorgesehen, der, in Strömungsrichtung der Flüssigkeit gesehen, eine Entgasungsanordnung 2 zum Entgasen der in der Messleitung 1 strömenden Flüssigkeit vorgeschaltet ist.

Diese damit oberstromig der Durchfluss-Messeinrichtung 4 angeordnete Entgasungsanordnung 2 besteht in an sich bekannter Weise aus einem Entgasungsbehälter 2a, der neben seiner Funktion als Gasabscheider auch die Funktion eines Speichers wahrnimmt, in dessen Kopfraum 2b eine Zulaufleitung 1.1, vorzugsweise tangential, einmündet und aus dessen Bodenbereich 2d eine Ablaufleitung 1.2, vorzugsweise wiederum tangential und gleichsinnig zur Zulaufleitung 1.1 oder auch zentral, ausmündet. Der Füllstand bzw. das Niveau der in der Entgasungsanordnung 2 befindlichen Flüssigkeit wird in an sich bekannter Weise über eine Füllstand-Erfassungseinrichtung 2c (z.B. Schwimmeranordnung, Peilstab, hochauflösender Wegaufnehmer) erfasst und in Verbindung mit einer ersten Druck-Steuereinrichtung 2.1 (für das Vakuumsystem I) oder mit einer zweiten Druck-Steuereinrichtung 2.2 (für das Pumpensystem II) gesteuert bzw. geregelt. Bezüglich weiterer gegenständlicher und funktionaler Einzelheiten geeigneter Entgasungsanordnungen 2 der in Rede stehenden Art wird auf die zahlreichen, vorstehend genannten einschlägigen Druckschriften verwiesen.

Die Messleitung 1 verzweigt sich oberstromig der Entgasungsanordnung 2 an einer Verzweigungsstelle 1.4 in die Zulaufleitung 1.1 und wenigstens eine Bypass-Leitung 1.3. Die wenigstens eine Bypass-Leitung 1.3 ist an der Entgasungsanordnung 2 vorbeigeführt und mit der aus letzterer austretenden Ablaufleitung 1.2 an einer Vereinigungsstelle 1.5 zusammengeführt. Die wenigstens eine Bypass-Leitung 1.3 und die Ablaufleitung 1.2 bilden, in Strömungsrichtung gesehen, hinter der Vereinigungsstelle 1.5 und damit unterstromig von Ablauf- 1.2 und Bypass-Leitung 1.3, einen Abschnitt der Messleitung 1, in dem die Durchfluss-Messeinrichtung 4 angeordnet ist. In einem anderen Abschnitt der Messleitung 1, oberstromig der Verzweigungsstelle 1.4 der Messleitung 1, ist eine Gasblasen-Erfassungseinrichtung 3 vorgesehen, die als Gasblasen-Meldeeinrichtung 3.1 (qualitative Erfassung der Gasanteile), die ein Steuersignal generiert, und/oder als erste Gasanteil-Messeinrichtung 3.2 (quantitative Erfassung der Gasanteile), die ein Mess- und/oder Steuersignal generiert, ausgebildet ist.

Die wenigstens eine Bypass-Leitung 1.3 ist unterstromig der Verzweigungsstelle 1.4 mit einem ersten Absperrventil 11 und oberstromig der Vereinigungsstelle 1.5 mit einem zweiten Absperrventil 12 jeweils wahlweise absperrbar. Dabei sind das erste Absperrventil 11 in unmittelbarer Nähe zur Verzweigungsstelle 1.4 und das zweite Absperrventil 12 in unmittelbarer Nähe zur Vereinigungsstelle 1.5 angeordnet. Beim Vakuumsystem I ist in der Messleitung 1, unterstromig der Vereinigungsstelle 1.5, eine erste Fördereinrichtung 8.1 angeordnet, die beim Pumpensystem II an dieser Stelle entfällt und an anderer Stelle der Messleitung 1, oberstromig der Verzweigungsstelle 1.4, in Gestalt einer zweiten Fördereinrichtung 8.2 vorgesehen ist.

Erfindungswesentlich für die erfindungsgemäße Vorrichtung, unabhängig davon, ob diese im Rahmen eines Vakuum- I oder Pumpensystems II Anwendung findet, ist die wenigstens eine Bypass-Leitung 1.3 an sich, deren Anbindung an die Messleitung 1 und deren Verlauf in Bezug auf die Entgasungsanordnung 2, sowie die Gasblasen-Erfassungseinrichtung 3 an sich und deren Anordnung in der Messleitung 1 und in Bezug auf die Verzweigungsstelle 1.4.

### Vakuumsystem (Figur 2) und Pumpensystem (Figur 3)

Die erfindungsgemäße Vorrichtung findet im Rahmen eines Vakuum- 1 oder Pumpensystem II ihre bevorzugte Anwendung in einem sog. Milchannahmesystem (s. **Figuren 2** und **3**), das die Milch aus einem Bereitstellungsbehälter B eines Lieferanten (z.B. Milchbauer) in einen Sammeltank T eines Transportfahrzeuges, beispielsweise einer Molkerei, überführt, dabei zunächst volumenmäßig, mit dem Ziel einer Mengenbestimmung (Masse), erfasst und im Regelfall gleichzeitig im Zuge der Überführung der Milch eine repräsentative Probe aus der überführten Milch gewinnt. Der Begriff "Milch" steht im Folgenden für den vorstehend durchgängig verwendeten Begriff "Flüssigkeit" und "Luft" steht für vorstehend durchgängig verwendeten Begriff "Gas". Ebenso sind die Begriffe "be- und entlüften" und ihre Abwandlungen aus "be- und entgasen" abgeleitet.

Der Bereitstellungsbehälter B ist entweder ein größeres Behältnis, beispielsweise in Form einer Milchwanne oder eines Behälters, oder er ist ein kleineres Behältnis, beispielsweise eine sog. Milchkanne. Im ersten Falle wird die Zulauföffnung E der Messleitung 1 über eine Schlauchleitung S an den Bereitstellungsbehälter B, der dann als Eintritt e in das Milchannahmesystem fungiert, angekuppelt. Im zweiten Falle wird die Milchkanne, die gleichfalls den Eintritt e in das Milchannahmesystem bildet, über eine Sauglanze L, die über eine Schlauchleitung S mit der Zulauföffnung E verbunden ist, entleert. Die Messleitung 1 geht an der Auslauföffnung A in eine nicht bezeichneten Rohrleitung über, in der ein Rückschlagventil 16 angeordnet ist, und diese Rohrleitung mündet letztlich über einen Austritt a in den Sammeltank T aus.

### Vakuumsystem (Figur 2)

Die erfindungsgemäße Vorrichtung nach **Figur 1** wird zu einer bevorzugten Ausführungsform des Vakuumsystems 1 (**Figur 2**), wenn die an den Kopfraum 2b der Entgasungsanordnung 2 angeschlossene erste Druck-Steuereinrichtung 2.1 aus einer Unterdruckquelle 2e, einem Entgasungsventil 2f, mit dem letztere mit dem Kopfraum 2b wahlweise verbindbar ist, und einem Begasungsventil 2g, mit dem eine Begasung bzw. Belüftung des Kopfraumes 2b aus der Umgebung im Bedarfsfall vorgenommen wird, besteht. Weiterhin ist zwischen der Gasblasen-Erfassungseinrichtung 3 und der Verzweigungsstelle 1.4 eine zweite Druck-Messeinrichtung 6.2 (zweiter Druck p₂) und eine wahlweise schaltbare, veränderbare zweite Drosseleinrichtung 10 angeordnet, wobei letztere beispielweise in Form eines Scheibenventils mit einem wenigstens einfach gelochten scheibenförmigen Schließglied als Drosselblende ausgebildet sein kann. Mit dem gemessenen zweiten Druck p₂ kann die erste Fördereinrichtung 8.1, vorzugsweise auch kennfeldabhängig, gesteuert werden. Die in der Gasblasen-Erfassungseinrichtung 3 ermittelten Messergebnisse können auch zur Steuerung der ersten Fördereinrichtung 8.1 herangezogen werden, wobei mit einer diesbezüglichen Steuerung der Kavitation und/oder der Kavitationsneigung in der ersten Fördereinrichtung 8.1 entgegen gewirkt wird.

In der Bypass-Leitung 1.3 ist eine wahlweise schaltbare, veränderbare dritte Drosseleinrichtung 13, beispielsweise ein Drosselventil mit stufenlos oder in diskreten Stufen oder innerhalb diskreter Stufen stufenlos veränderbarem Strömungsquerschnitt, angeordnet. Mit der Drosseleinrichtung 13 lässt sich der Druckverlustbeiwert der Bypass-Leitung 1.3 in Grenzen verändern und damit ist das Verhältnis des über die Entgasungsanordnung 2 geführten Fluidstromes und des an dieser vorbeigeführten Fluidstromes unter den jeweiligen Betriebsbedingungen veränderlich steuer- und einstellbar.

Die erste Fördereinrichtung 8.1, die vorzugsweise als Kreiselpumpe ausgeführt ist, wird durch eine vorzugsweise hydraulisch arbeitende Antriebseinrichtung 8a angetrieben, wobei letztere über eine Drehzahl-Regeleinrichtung 8b verfügt, mit der in Abhängigkeit von der Drehzahl n beispielsweise eine kennfeldabhängige Steuerung der ersten Fördereinrichtung 8.1 vorgenommen werden kann.

Von der Messleitung 1 zweigt, unterstromig der ersten Fördereinrichtung 8.1, insbesondere von deren Druckstutzen oder von einem diesem sich anschließenden Rohrleitungsbereich, eine Füllleitung 1.6 ab, die in die Bypass-Leitung 1.3, oberstromig des zweiten Absperrventils 12, einmündet und vorzugsweise unmittelbar vor ihrer Einmündungsstelle durch ein drittes Absperrventil 14 wahlweise schaltbar ist.

In der Messleitung 1, unterstromig der Durchfluss-Messeinrichtung 4, ist eine wahlweise schaltbare, veränderbare erste Drosseleinrichtung 7 angeordnet. Letztere weist einen einzigen, stufenlos oder binär (auf/zu) oder in diskreten Stufen oder innerhalb diskreter Stufen stufenlos veränderbaren Strömungsquerschnitt auf. Vorzugsweise sind in dem Drosselventil 7 wenigstens zwei binär (auf/zu) schaltbare, parallele Strömungswege mit festen, unterschiedlich großen, in der Größe gestuften Strömungsquerschnitten ausgebildet. Es ist weiterhin besonders vorteilhaft, wenn parallel zu den schaltbaren Strömungswegen ein nicht schaltbarer Strömungsweg vorgesehen ist, dessen Strömungsquerschnitt kleiner als der kleinste schaltbare Strömungsquerschnitt ausgeführt ist.

Eine bevorzugte Ausführungsform des Drosselventils 7 sieht drei binär schaltbare Strömungswege vor, die beispielsweise in DN25, DN32 und DN50 gestuft ausgeführt sind, und den in DN16 ausgeführten, nicht schaltbaren Strömungsweg, sodass acht Schaltstellungen mit acht unterschiedlich großen Durchtrittsquerschnitten insgesamt, die einen Querschnittsbereich abdecken, der als bezogene Größe von 100 % für den größten Querschnitt und bis zu 5,8 % für den kleinsten Querschnitt reicht. In der nachfolgenden Schalttabelle sind die Schaltstellungen angegeben, wobei der Wert "0" für "Strömungsweg geschlossen" und "1" für "Strömungsweg offen" steht:

| **Schaltstellung** | **DN16** | **DN25** | **DN32** | **DN50** | **Gesamtquerschnitt in %** |
|---|---|---|---|---|---|
| **1** | **1** | **0** | **0** | **0** | **5,8** |
| **2** | **1** | **1** | **0** | **0** | **20** |
| **3** | **1** | **0** | **1** | **0** | **29** |
| **4** | **1** | **1** | **1** | **0** | **43,2** |
| **5** | **1** | **0** | **0** | **1** | **62,6** |
| **6** | **1** | **1** | **0** | **1** | **76,8** |
| **7** | **1** | **0** | **1** | **1** | **85,8** |
| **8** | **1** | **1** | **1** | **1** | **100** |

| | | | | | |
|---|---|---|---|---|---|
| Schalttabelle | | | | | |

In Aufbau und Wirkungsweise der vorstehend beschriebenen Drosseleinrichtung 7, die ein sehr schnelles Schalten der einzelnen Strömungswege erlaubt, vergleichbare Drosseleinrichtungen lassen sich vorteilhaft auch für die zweite und die dritte Drosseleinrichtung 10 bzw. 13 verwirklichen.

In der Messleitung 1 ist, vorzugsweise unmittelbar unterstromig der Durchfluss-Messeinrichtung 4, eine zweite Gasanteil-Messeinrichtung 5 angeordnet, mit der die nicht abgeschiedenen Gasanteile in der überführten Flüssigkeit gemessen werden, wobei der gemessene Gasanteil zur Korrektur von Messwerten der Durchfluss-Messeinrichtung 4 herangezogen wird.

Neben der Durchfluss-Messeinrichtung 4, die Messinformationen über die Geschwindigkeit oder den Volumenstrom der in der Messleitung 1 überführten Flüssigkeit bereitstellt, sind weiterhin zwischen der Durchfluss-Messeinrichtung 4 und der ersten Drosseleinrichtung 7 eine Temperatur-Messeinrichtung 15 zur Messung einer Temperatur ϑ sowie eine erste Druck-Messeinrichtung 6.1 zur Messung eines ersten Druckes p₁ der überführten und volumenmäßig erfassten Flüssigkeit angeordnet. Die jeweils gewonnene Information über den ersten Druck p₁ kann zur Steuerung der ersten Fördereinrichtung 8.1 herangezogen werden und die jeweils ermittelten aktuellen Informationen über Geschwindigkeit, Volumenstrom, ersten Druck p₁ und Temperatur ϑ werden beim Berechnen der Flüssigkeitsmenge (Masse) aus dem in der Durchfluss-Messeinrichtung 4 gemessenen Flüssigkeitsvolumen herangezogen.

Die erfindungsgemäße Vorrichtung weist sowohl beim Vakuumsystem I als auch beim Pumpensystem II weiterhin eine Steuereinrichtung 9 auf, die zur Durchführung des erfindungsgemäßen Verfahrens eingerichtet ist.

### Vakuumsystem (Figur 2) - Überführungsvorgang (Annahmevorgang)

Zur Erläuterung des Überführungsvorganges am Beispiel von Milch wird auf **Figur 2** Bezug genommen, wobei zur Vereinfachung davon ausgegangen wird, dass das Vakuumsystem I in der Entgasungsanordnung 2 bis zu einem Abschaltniveau (auch als Eichniveau bezeichnet), bei dem die Mengenabgrenzung des aktuellen und zum nachfolgenden Lieferanten vorgenommen wird, mit Milch gefüllt ist.

Zu Beginn der Überführung sind das erste Absperrventil 11, das zweite Absperrventil 12 und das dritte Absperrventil 14 geschlossen und die Unterdruckquelle 2e wird über das Entgasungsventil 2f mit dem Kopfraum 2b der Entgasungsanordnung 2 verbunden und erzeugt dort einen Unterdruck gegenüber dem Eintritt e bzw. der Zulauföffnung E. Infolge des erzeugten Unterdruckes wird zunächst ein Milch/Luft-Gemisch über den Eintritt e angesaugt, das die Messleitung 1 füllt und über die Zulaufleitung 1.1 in den Entgasungsbehälter 2 einströmt. Letzterer beginnt sich über das Abschaltniveau hinaus zu befüllen, wobei gleichzeitig die mitgeführte und aus der Milch abgeschiedene Luft über die erste Druck-Steuereinrichtung 2.1 unter der Wirkung der Unterdruckquelle 2e aus dem Kopfraum 2b abgeführt wird.

Bei einem bestimmten Betriebsniveau oberhalb des Abschaltniveaus wird die erste Fördereinrichtung 8.1 zugeschaltet, wodurch entlüftete Milch über die Ablaufleitung 1.2 aus dem Bodenbereich 2d in die Messleitung 1 abgeführt und dort in ihrem weiteren Verlauf, unter Überwindung eines durch die erste Drosseleinrichtung 7 erzeugten Strömungswiderstandes und damit auf einem veränderlich steuerbaren, einstellbaren Druckniveau, bei dem die ggf. nicht abgeschiedenen Gasblasen komprimiert und damit volumenmäßig verkleinert werden, in der Durchfluss-Messeinrichtung 4 volumenmäßig erfasst wird. Der in der abgeführten Milch ggf. verbleibende Gasanteil wird in der zweiten Gasanteil-Messeinrichtung 5 erfasst und nachfolgend werden die Temperatur ϑ der Milch über die Temperatur-Messeinrichtung 15 und der erste Druck p₁ der Milch über die erste Druck-Messeinrichtung 6.1 gemessen. Die Messwerte werden beim Berechnen der Milchmenge herangezogen.

Der nicht mit Milch erfüllte, unter Unterdruck stehende Kopfraum 2b der Entgasungsanordnung 2 übernimmt die Kopplung des in die Entgasungsanordnung 2 eintretenden und des austretenden Fluidstromes, wobei sich unter den jeweiligen Betriebsbedingungen ein veränderliches Betriebsniveau oberhalb des Abschaltniveaus einstellt. Zu Einzelheiten über die Wirkungsweise der Entgasungsanordnung 2 im Rahmen eines Vakuumsystems I wird auf die Druckschrift DE 34 40 092 A1 verwiesen.

Insbesondere bei größeren zu überführenden Milchmengen wird ein Überführungszustand eintreten, bei dem Milch ohne nennenswerte bzw. detektierbare Luftanteile in die Messleitung 1 eintritt. In diesem Falle verliert die Entgasungsanordnung an sich ihre Entgasungsfunktion; sie hat nur noch Speicherfunktion und dem Kopfraum verbleibt die vorg. Kopplungsfunktion, ohne die ein Vakuumsystem I nicht funktionsfähig ist.

Hier setzt nun die vorliegende Erfindung an, indem die Entgasungsanordnung 2 über die gesamte Zeitdauer der Überführung auch weiterhin durchgängig mit wenigstens einem Teil der zu überführenden Milch beaufschlagt wird. Gleichzeitig wird aber die Notwendigkeit, die zu überführende Milch zu entgasen, oberstromig der Entgasungsanordnung 2 über die Gasblasen-Erfassungseinrichtung 3 in der bereits vorstehend beschriebenen Weise fortwährend festgestellt. Wenn kein Bedarf zur Entgasung der Milch besteht, wird zunächst die Bypass-Leitung 1.3 über die Füllleitung 1.6 luftfrei befüllt, indem das erste Absperrventil 11 und anschließend das dritte Absperrventil 14 geöffnet werden. Nach ausreichender Verzögerungszeit wird das dritte Absperrventil 14 geschlossen und das zweite Absperrventil 12 geöffnet, sofern keine Luft in der Gasblasen-Erfassungseinrichtung 3 detektiert wird.

Nunmehr wird die zu überführende Milch an der Verzweigungsstelle 1.4 aufgeteilt und in die Zulaufleitung 1.1 und die Bypass-Leitung 1.3 verzweigt. Durch eine geeignete Steuerung, die vorstehend bereits beschrieben wurde, wird das Verhältnis des über die Entgasungsanordnung 2 geführten Fluidstromes und des an dieser über die Bypass-Leitung 1.3 vorbeigeführten Fluidstromes eingestellt. Der Fluidstrom über die Bypass-Leitung 1.3 kann um ein Vielfaches gegenüber dem Fluidstrom durch die Entgasungsanordnung 2 hochgefahren werden. Dabei stellt letztere entweder eine Durchsatzleistung bereit, die unter den jeweiligen Überführungsbedingungen stets ihr mögliches Maximum ausschöpft oder die bis weit unterhalb ihrer maximal möglichen Durchsatzleistung liegt. Im letzten Falle bleibt die Entgasungsanordnung 2 immer noch betriebsbereit und kann im Bedarfsfall sehr schnell auch wieder ihre Entgasungsfunktion bei größtmöglicher Überführungsleistung aufnehmen. Die größtmögliche Verlagerung der Überführungsleistung auf die Bypass-Leitung 1.3 bedeutet gleichzeitig auch eine Maximierung auf die größtmögliche Überführungsleistung des gesamten Vakuumsystems I.

### Vakuumsystem (Figur 2) - Überführung mit Lufterkennung

Beim Auftreten von Störungszuständen, die mit einem Lufteinbruch in die Messleitung 1 im Bereich der Zulauföffnung E einhergehen, muss unverzüglich sichergestellt werden, dass keine Luft die Bypass-Leitung 1.3 erreicht. Sobald die Gasblasen-Meldeeinrichtung 3 Gasblasen detektiert, wird das erste Absperrventil 11 geschlossen und die Überführungsleistung wird durch Aktivierung der zweiten Drosseleinrichtung 10 so weit gedrosselt, dass keine Überflutung der Entgasungsanordnung 2 eintritt. Nach einer gewissen Anpassungszeit befindet sich das Vakuumsystem I in einem Betriebszustand, bei dem ausschließlich die Entgasungsanordnung 2 mit einem Milch/Luft-Gemisch beaufschlagt wird und diese ihre Abscheidefunktion für Luft in an sich bekannter Weise und mit der ihr maximal möglichen Überführungsleistung wahrnimmt, wobei die zusätzliche Drosselfunktion der zweiten Drosseleinrichtung 10 nunmehr wieder aufgehoben ist.

### Vakuumsystem (Figur 2) - Ende eines Überführungsvorganges

Das reguläre Ende eines Überführungsvorganges tritt ein, wenn der Bereitstellungsbehälter B leerfällt und Luft mit der angesaugten Milch in den Eintritt e gelangt. In diesem Falle wird zunächst in der Weise verfahren, wie dies vorstehend unter "Überführung mit Lufterkennung" beschrieben wurde.

Im Unterschied hierzu ist anschließend, da schließlich keine Milch mehr gefördert wird, ein Anfahren des Abschaltniveaus bzw. des Eichniveaus in der Entgasungsanordnung 2 vorzunehmen, damit eine genaue Mengenabgrenzung gegenüber der Milchlieferung des aktuellen und des nachfolgenden Lieferanten erfolgen kann. Im Zuge dieser Mengenabgrenzung ist auch die Bypass-Leitung 1.3 in die Betrachtung einzubeziehen.

### Mengenabgrenzung unter-Berücksichtigung der Bypass-Leitung

1. War die Bypass-Leitung 1.3 im Zuge der Überführung nicht in Betrieb, dann ist ihr Befüllungszustand im Zusammenhang mit der Mengenabgrenzung dann ohne Bedeutung, wenn der Befüllungszustand am Ende der Überführung jenem am Anfang entspricht.
2. War die Bypass-Leitung 1.3 im Zuge der Überführung in Betrieb, dann muss am Ende der Überführung entweder jener Zustand hergestellt werden, der am Anfang der Überführung bestand, oder es muss bei einer Umkehrung der Verhältnisse (Bypass-Leitung vorher leer, nachher voll; vorher voll und nachher leer) eine rechnerische Berücksichtigung der in Frage kommenden Füllmenge vorgenommen werden.

### Weitere Möglichkeiten:

- Bypass-Leitung 1.3 war am Anfang vollständig entleert:
   Zeitlich gesehen, ist vor dem an sich bekannten Anfahren des Eichniveaus die Bypass-Leitung 1.3 auf dem Weg über die Zulaufleitung 1.1 in die Entgasungsanordnung 2 durch den dort vorherrschenden Unterdruck vollständig zu entleeren. Zu diesem Zweck wird das erste Absperrventil 11 geöffnet und es findet eine kurzzeitige Belüftung der Bypass-Leitung 1.3 im Bereich des zweiten Absperrventils 12 über nicht dargestellte Mittel statt.
- Bypass-Leitung 1.3 war am Anfang vollständig entleert:
   Der Füllstand in der Bypass-Leitung 1.3 stellt sich, nach dem Prinzip der kommunizierenden Röhren, im Zuge des schleichenden Anfahrens auf das Abschalt- bzw. Eichniveaus im Entgasungsbehälter 2 bei geöffneten Absperrventilen 11 und 12 gleichfalls auf dieses Abschaltniveau ein und die unter diesen Bedingungen in der Bypass-Leitung 1.3 letztlich vorliegende Füllmenge wird bei der Mengenabgrenzung rechnerisch berücksichtigt.
- Bypass-Leitung 1.3 war am Anfang vollständig befüllt:
   Die vorstehend beschriebene rechnerische Berücksichtigung der beim Abschaltniveau vorliegenden Füllmenge lässt sich sinngemäß auch bei einer zu Beginn der Überführung vollständig befüllten Bypass-Leitung 1.3 anwenden.

### Pumpensystem (Figur 3)

Eine bevorzugte Ausführungsform eines Pumpensystems II (**Figur 3**) unterscheidet sich von der bevorzugten Ausführungsform des Vakuumsystems I (**Figur 2**) durch die bereits vorstehend beschriebene Anordnung der zweiten Fördereinrichtung 8.2. Die zweite Druck-Messeinrichtung 6.2, mit der vorzugsweise Kavitation und/oder Kavitationsneigung detektiert wird, entfällt, da die zweite Fördereinrichtung 8.2, die vorzugsweise als rotierende Verdrängerpumpe ausgebildet ist, unter den obwaltenden Betriebsbedingungen eines Pumpensystems II weniger kavitationsanfällig ist.

An den Kopfraum 2b der Entgasungsanordnung 2 ist eine zweite Druck-Steuereinrichtung 2.2 angeschlossen, die aus einem ein- oder mehrstufigen Ent- und Begasungsventil 2h besteht, mit dem der Kopfraum 2b, vorzugsweise gesteuert durch die Füllstand-Erfassungseinrichtung 2c, in die Umgebung ent- oder aus der Umgebung begast werden kann. Bei der Milchüberführung handelt es sich um ein Ent- oder Belüften.

Von der Messleitung 1 zweigt, unterstromig der zweiten Fördereinrichtung 8.2, insbesondere von deren Druckstutzen oder von einem diesem sich anschließenden Leitungsbereich, eine Füllleitung 1.6 ab, die in die Bypass-Leitung 1.3, oberstromig des zweiten Absperrventils 12, einmündet und vorzugsweise unmittelbar vor ihrer Einmündungsstelle durch ein drittes Absperrventil 14 wahlweise schaltbar ist.

### Pumpensystem (Figur 3) - Überführungsvorgang (Annahmevorgang)

Das Pumpensystem II (**Figur 3**) unterscheidet sich hinsichtlich des Überführungsvorganges vom vorstehend beschriebenen Vakuumsystem 1 (**Figur 2**) lediglich durch die Funktion des Kopfraumes 2b der Entgasungsanordnung 2 in Verbindung mit der oberstromig letzterer angeordneten zweiten Fördereinrichtung 8.2. Im Kopfraum 2b wird ein Überdruck gegenüber dem Zielort für die Milch, nämlich dem Rückschlagventil 16 im Bereich der Auslauföffnung A, erzeugt. Dieser Überdruck wird durch die zweite Fördereinrichtung 8.2 erzeugt und durch die zweite Druck-Steuereinrichtung 2.2 gesteuert.

Der nicht mit Milch erfüllte, unter Überdruck stehende Kopfraum 2b der Entgasungsanordnung 2 übernimmt auch beim Pumpensystem II die Kopplung des in die Entgasungsanordnung 2 eintretenden und des austretenden Fluidstromes, wobei sich unter den jeweiligen Betriebsbedingungen ein veränderliches Betriebsniveau oberhalb des Abschaltniveaus einstellt. Zu Einzelheiten über die Wirkungsweise der Entgasungsanordnung 2 im Rahmen eines Pumpensystems II wird wiederum auf die Druckschrift DE 34 40 092 A1 verwiesen.

Zur Erläuterung des Überführungsvorganges beim Pumpensystem II, und hier wiederum am Beispiel von Milch, wird auf die diesbezüglichen Ausführungen zum Vakuumsystem I verwiesen, die sinngemäß zu übertragen sind, da beide Systeme, bis auf die vorstehend erwähnten geringfügigen Unterschiede, gegenständlich und, bezüglich dieser gegenständlichen Elemente, auch funktional identisch sind.

### Pumpensystem (Figur 3) - Überführung mit Lufterkennung

Auch die vorstehenden Ausführungen zum Vakuumsystem I sind mit Blick auf eine "Überführung mit Lufterkennung" sinngemäß auf das Pumpensystem II zu übertragen.

### Pumpensystem (Figur 3) - Ende eines Überführungsvorganges

Die vorstehenden Ausführungen zum Vakuumsystem I sind mit Blick auf das "Ende eines Überführungsvorganges" gleichfalls sinngemäß auf das Pumpensystem II zu übertragen. Hinsichtlich der Entleerung der Bypass-Leitung 1.3 im Zuge der Mengenabgrenzung ergibt sich hier allerdings ein Unterschied zum Vakuumsystem I. Da die Bypass-Leitung 1.3 wegen des im Kopfraum 2b anstehenden Überdruckes nicht durch Öffnen des ersten Absperrventils 11 leergesaugt werden kann, ist hier vorgesehen, die Milch aus der Bypass-Leitung 1.3 durch ein gasförmiges Druckmittel, vorzugsweise Luft, das durch nicht dargestellte Mittel im Bereich des zweiten Absperrventils 12 zugeführt wird, in die Zulaufleitung 1.1 und von dort in die Entgasungsanordnung 2 restlos zu verdrängen. Darüber hinaus finden alle weiteren, im Zusammenhang mit dem Vakuumsystem kurz erläuterten Möglichkeiten der Mengenabgrenzung mit Blick auf den Füllzustand der Bypass-Leitung 1.3 sinngemäß Anwendung.

Das erfindungsgemäße Verfahren und die Vorrichtung zu seiner Durchführung sind auf die unterschiedlichsten Flüssigkeiten anwendbar, bei deren Überführung eine exakte Mengenbestimmung vorgenommen werden muss. Sie sind in besonderer Weise für Flüssigkeiten geeignet, die Gasbestandteile mitführen oder auf dem Weg ihrer Überführung Gasbestandteile entbinden, wobei diese Gasbestandteile in der Entgasungsanordnung aus der Flüssigkeit abzuscheiden sind, damit eine Verfälschung des Messergebnisses in der Durchfluss-Messeinrichtung sicher verhindert wird. Das erfindungsgemäße Verfahren und die Vorrichtung zu seiner Durchführung sind geeignet sowohl zum Sammeln einer Flüssigkeit aus Anlieferungsbehältern verschiedener Lieferanten in einen Sammeltank (z. B. Einsammeln von Milch mittels eines Milchsammelwagens) als auch zum Verteilen einer Flüssigkeit aus einem Vorratstank in Aufnahmebehälter verschiedener Abnehmer (z.B. Tankwagen zur Verteilung unterschiedlichster Kraftstoffe).

### BEZUGSZEICHENLISTE DER VERWENDETEN ABKÜRZUNGEN

- 1: Messleitung
- 1.1: Zulaufleitung (zur Entgasungsanordnung)
- 1.2: Ablaufleitung (von der Entgasungsanordnung)
- 1.3: Bypass-Leitung
- 1.4: Verzweigungsstelle
- 1.5: Vereinigungsstelle
- 1.6: Füllleitung

- 2: Entgasungsanordnung
- 2a: Entgasungsbehälter (Speicherbehälter)
- 2b: Kopfraum
- 2c: Füllstand-Erfassungseinrichtung
- 2d: Bodenbereich

- 2.1: erste Druck-Steuereinrichtung (Vakuumsystem)
- 2e: Unterdruckquelle
- 2f: Entgasungsventil
- 2g: Begasungsventil

- 2.2: zweite Drucksteuereinrichtung (Pumpensystem)
- 2h: Ent- und Begasungsventil

- 3: Gasblasen-Erfassungseinrichtung
- 3.1: Gasblasen-Meldeeinrichtung (qualitative Erfassung)
- 3.2: erste Gasanteil-Messeinrichtung (quantitative Erfassung)

- 4: Durchfluss-Messeinrichtung
- 5: zweite Gasanteil-Messeinrichtung (quantitative Erfassung)

- 6.1: erste Druck-Messeinrichtung
- 6.2: zweite Druck-Messeinrichtung
- 7: erste Drosseleinrichtung

- 8.1: erste Fördereinrichtung
- 8.2: zweite Fördereinrichtung
- 8a: Antriebseinrichtung
- 8b: Drehzahl-Regeleinrichtung

- 9: Steuereinrichtung
- 10: zweite Drosseleinrichtung
- 11: erstes Absperrventil
- 12: zweites Absperrventil
- 13: dritte Drosseleinrichtung
- 14: drittes Absperrventil
- 15: Temperatur-Messeinrichtung
- 16: Rückschlagventil

- a: Austritt
- e: Eintritt
- n: Drehzahl der Fördereinrichtung

- p₁: erster Druck in der Messleitung 1 im Bereich der Durchfluss-Messeinrichtung 4
- p₂: zweiter Druck in der Messleitung 1 im Bereich der Gasblasen-Erfassungseinrichtung 3

- ϑ: Temperatur der Flüssigkeit im Bereich der Durchfluss-Messeinrichtung 4

- A: Auslauföffnung
- B: Bereitstellungsbehälter
- E: Zulauföffnung
- L: Sauglanze
- S: Schlauchleitung
- T: Sammeltank

- I: Vakuumsystem
- II: Pumpensystem

## Patentansprüche

1. Verfahren zur Mengenbestimmung bei der Überführung einer Flüssigkeit, bei dem
• die Flüssigkeit an einer Zulauföffnung (E) in eine Messleitung (1) eingeleitet wird und an einer Auslauföffnung (A) aus der Messleitung (1) ausgeleitet wird, und
• eine durch die Messleitung (1) strömende Flüssigkeitsmenge mittels einer der Messleitung (1) zugeordneten Durchfluss-Messeinrichtung (4) bestimmt wird,
• wobei zum Entgasen der in der Messleitung (1) strömenden Flüssigkeit vor Erreichen der Durchfluss-Messeinrichtung (4) eine Entgasungsanordnung (2) vorgesehen ist,
**dadurch gekennzeichnet,**
• **dass** die Entgasungsanordnung (2) über die gesamte Zeitdauer der Überführung durchgängig beaufschlagt wird,
• **dass** die Notwendigkeit, die zu überführende Flüssigkeit zu entgasen, oberstromig der Entgasungsanordnung (2) fortwährend mittels einer Gasblasen-Erfassungseinrichung (3) festgestellt wird,
• **dass** die zu überführende Flüssigkeit vor Erreichen der Entgasungsanordnung (2) und wahlweise dann, wenn kein Bedarf zu ihrem Entgasen besteht, aufgeteilt und verzweigt wird,
• und **dass** der nicht der Entgasungsanordnung (2) zugeführte Teil der zu überführenden Flüssigkeit an der Entgasungsanordnung (2) vorbeigeführt und unterstromig der Entgasungsanordnung (2) mit der aus dieser austretenden Flüssigkeit zusammengeführt und die zusammengeführte Flüssigkeit der Durchfluss-Messeinrichtung (4) zugeführt wird.

2. Verfahren nach Anspruch 1,
**dadurch gekennzeichnet,**
**dass** die zu überführende Flüssigkeit aufgeteilt wird, wenn
• keine Gasblasen in der Flüssigkeit vorhanden sind oder
• Flüssigkeit mit einem Gasanteil unterhalb eines vorher bestimmten Wertes oder gleich dem vorher bestimmten Wert vorliegt.

3. Verfahren nach Anspruch 1 oder 2,
**dadurch gekennzeichnet,**
**dass** das Vorhandensein oder das Nichtvorhandensein von Gasblasen in der zu überführenden Flüssigkeit ermittelt und diese Information zur Steuerung der Aufteilung der zu überführenden Flüssigkeit herangezogen wird.

4. Verfahren nach Anspruch 1 oder 2,
**dadurch gekennzeichnet,**
**dass** der Gasanteil in der zu überführenden Flüssigkeit ermittelt wird und diese Information zur Steuerung der Aufteilung der zu überführenden Flüssigkeit herangezogen wird.

5. Verfahren nach einem der Ansprüche 1 bis 4,
**dadurch gekennzeichnet,**
**dass** die Entgasungsanordnung (2) im Falle der Aufteilung der zu überführenden Flüssigkeit eine Durchsatzleistung bereitstellt, die unter den jeweiligen Überführungsbedingungen stets unterhalb ihrer maximal möglichen Durchsatzleistung liegt.

6. Verfahren nach einem der vorhergehenden Ansprüche,
**dadurch gekennzeichnet,**
**dass** die Entgasungsanordnung (2) einen nicht von Flüssigkeit erfüllten Kopfraum (2b) aufweist, der die aus der Entgasungsanordnung (2) über eine erste Fördereinrichtung (8.1) abgeführte Flüssigkeit mit einem Unterdruck gegenüber ihrem Herkunftsort in die Entgasungsanordnung (2) hineinfördert, und dass im Falle der Aufteilung der zu überführenden Flüssigkeit die erste Fördereinrichtung (8.1) die gesamte zu überführende und hinter der Entgasungsanordnung (2) zusammengeführte Flüssigkeit zu ihrem Zielort fördert.

7. Verfahren nach einem der Ansprüche 1 bis 5,
**dadurch gekennzeichnet,**
**dass** die Entgasungsanordnung (2) einen nicht von Flüssigkeit erfüllten Kopfraum (2b) aufweist, der die der Entgasungsanordnung (2) über eine zweite Fördereinrichtung (8.2) zugeführte Flüssigkeit mit einem Überdruck gegenüber dem Zielort für die Flüssigkeit aus der Entgasungsanordnung (2) herausfördert, und dass im Falle der Aufteilung der zu überführenden Flüssigkeit die zweite Fördereinrichtung (8.2) die gesamte zu überführende und vor der Entgasungsanordnung (2) noch nicht aufgeteilte Flüssigkeit zu ihrem Zielort fördert.

8. Verfahren nach einem der vorhergehenden Ansprüche,
**dadurch gekennzeichnet,**
**dass** das Verhältnis des über die Entgasungsanordnung (2) geführten Fluidstromes und des an dieser vorbeigeführten Fluidstromes, generiert jeweils aus der zu überführenden Flüssigkeit, durch die die jeweilige Fluidverbindung kennzeichnenden Druckverlustbeiwerte bestimmt ist.

9. Verfahren nach Anspruch 8,
**dadurch gekennzeichnet,**
**dass** die Druckverlustbeiwerte fest vorgegeben sind und damit das Verhältnis der Fluidströme unter den jeweiligen Überführungsbedingungen festgelegt ist.

10. Verfahren nach Anspruch 8,
**dadurch gekennzeichnet,**
**dass** wenigstens ein Druckverlustbeiwert in Grenzen veränderlich und damit das Verhältnis der Fluidströme unter den jeweiligen Betriebsbedingungen veränderlich steuerbar ist.

11. Verfahren nach einem der vorhergehenden Ansprüche,
**dadurch gekennzeichnet,**
**dass** oberstromig der Aufteilung und Verzweigung der zu überführenden Flüssigkeit die in dieser mitgeführten Gasblasen qualitativ und/oder quantitativ erfasst werden.

12. Verfahren nach einem der vorhergehenden Ansprüche,
**dadurch gekennzeichnet,**
**dass** ein oberstromig der Entgasungsanordnung (2), insbesondere oberstromig der Aufteilung und Verzweigung der zu überführenden Flüssigkeit, angeordneter Strömungsquerschnitt zur Vermeidung einer Überflutung der Entgasungsanordnung (2) durch die diese beaufschlagende Fluidströmung stufenlos oder in diskreten Stufen oder innerhalb diskreter Stufen stufenlos reduziert wird.

13. Verfahren nach einem der vorhergehenden Ansprüche,
**dadurch gekennzeichnet,**
**dass** in der Messleitung (1) oberstromig der Aufteilung und Verzweigung der zu überführenden Flüssigkeit der Anteil der in dieser mitgeführten Gasblasen zum Einen nach Betrag und zum Anderen nach Verteilung über den betrachteten Strömungsquerschnitt ermittelt wird und diese Informationen zur Gewinnung einer repräsentativen Probe aus der überführten Flüssigkeitsmenge herangezogen werden.

14. Vorrichtung zur Mengenbestimmung bei der Überführung einer Flüssigkeit, insbesondere zum Durchführen des Verfahrens nach einem der vorstehenden Ansprüche, mit
• einer Messleitung (1), die an ihrem einen Ende eine Zulauföffnung (E) und an ihrem anderen Ende eine Auslauföffnung (A) für die Flüssigkeit aufweist,
• einer der Messleitung (1) zugeordneten Durchfluss-Messeinrichtung (4) zum Messen einer durch die Messleitung (1) strömenden Flüssigkeitsmenge,
• und einer oberstromig der Durchfluss-Messeinrichtung (4) angeordneten Entgasungsanordnung (2) zum Entgasen der in der Messleitung (1) strömenden Flüssigkeit,
**dadurch gekennzeichnet**,
• dasssich die Messleitung (1) oberstromig der Entgasungsanordnung (2) in eine Zulaufleitung (1.1) zur Entgasungsanordnung (2) und wenigstens eine Bypass-Leitung (1.3) verzweigt,
• dass die wenigstens eine Bypass-Leitung (1.3) an der Entgasungsanordnung (2) vorbeigeführt und mit einer aus der Entgasungsanordnung (2) austretenden Ablaufleitung (1.2) zusammengeführt ist,
• dass die wenigstens eine Bypass-Leitung (1.3) und die Ablaufleitung (1.2) unterstromig ihrer Vereinigungsstelle (1.5) einen Abschnitt der Messleitung (1) bilden, in dem die Durchfluss-Messeinrichtung (4) angeordnet ist,
• dass in einem Abschnitt der Messleitung (1),oberstromig der Verzweigungsstelle (1.4) von Zulaufleitung (1.1) und der wenigstens einen Bypass-Leitung (1.3), eine Gasblasen-Erfassungseinrichtung (3) angeordnet ist,
• und dass in der Bypass-Leitung (1.3), unterstromig der Verzweigungsstelle (1.4) und oberstromig der Vereinigungsstelle (1.5), jeweils ein Absperrventil (11, 12) vorgesehen ist.

15. Vorrichtung nach Anspruch 14,
**dadurch gekennzeichnet,**
**dass** in der Messleitung (1), unterstromig der Durchfluss-Messeinrichtung (4), eine wahlweise schaltbare, veränderbare erste Drosseleinrichtung (7) angeordnet ist.

16. Vorrichtung nach Anspruch 15,
**dadurch gekennzeichnet,**
**dass** die Drosseleinrichtung (7) einen einzigen, stufenlos oder binär (auf/zu) oder in diskreten Stufen oder innerhalb diskreter Stufen stufenlos veränderbaren Strömungsquerschnitt aufweist.

17. Vorrichtung nach Anspruch 15,
**dadurch gekennzeichnet,**
**dass** die Drosseleinrichtung (7) wenigstens zwei binär (auf/zu) schaltbare, parallele Strömungswege mit festen, unterschiedlich großen, in der Größe gestuften Strömungsquerschnitten aufweist.

18. Vorrichtung nach Anspruch 16 oder 17,
**dadurch gekennzeichnet,**
**dass** parallel zu den schaltbaren Strömungswegen ein nicht schaltbarer Strömungsweg vorgesehen ist, dessen Strömungsquerschnitt kleiner als der kleinste schaltbare Strömungsquerschnitt ausgeführt ist.

19. Vorrichtung nach einem der vorstehenden Ansprüche,
**dadurch gekennzeichnet,**
**dass** von der Messleitung (1), unterstromig der Fördereinrichtung (8.1, 8.2), insbesondere von deren Druckstutzen oder von einem diesem sich anschließenden Leitungsbereich, eine Füllleitung (1.6) abzweigt, die in die Bypass-Leitung (1.3), oberstromig des zweiten Absperrventils (12), einmündet.

## Claims

1. Method for determining a quantity when transferring a liquid, in which
• the liquid is introduced into a measuring line (1) at an inlet opening (E) and is discharged from the measuring line (1) at an outlet opening (A), and
• a quantity of liquid flowing through the measuring line (1) is determined by means of a throughflow-measuring device (4) assigned to the measuring line (1),
• a degasification unit (2) is provided for the degasification of the liquid flowing in the measuring line (1) before reaching the throughflow-measuring device (4),
**characterised**
• **in that** the degasification unit (2) is continuously acted upon for the entire duration of the transfer,
• **in that** the necessity for the degasification of the liquid to be transferred is continuously ascertained upstream of the degasification unit (2) by means of a gas bubble detection device (3),
• **in that** the liquid to be transferred is divided and branched off prior to reaching the degasification unit (2) and selectively if there is no necessity for the degasification of said liquid,
• and **in that** the part of the liquid to be transferred which is not supplied to the degasification unit (2) is conducted past the degasification unit (2) and downstream of the degasification unit (2) is merged with the liquid emerging from said degasification unit and the merged liquid is supplied to the throughflow-measuring device (4).

2. Method according to Claim 1,
**characterised**
**in that** the liquid to be transferred is divided if
• no gas bubbles are present in the liquid or
• liquid is present with a proportion of gas below a previously determined value or equal to the previously determined value.

3. Method according to Claim 1 or 2,
**characterised**
**in that** the presence or the absence of gas bubbles in the liquid to be transferred is determined and this information is used for controlling the division of the liquid to be transferred.

4. Method according to Claim 1 or 2,
**characterised**
**in that** the proportion of gas in the liquid to be transferred is determined and this information is used for controlling the division of the liquid to be transferred.

5. Method according to one of Claims 1 to 4,
**characterised**
**in that**, if the liquid to be transferred is divided, the degasification unit (2) provides a throughput capacity which is always below the maximum possible throughput capacity thereof under the respective transfer conditions.

6. Method according to one of the preceding claims,
**characterised**
**in that** the degasification unit (2) has a top space (2b) which is not filled with liquid, said top space conveying into the degasification unit (2) the liquid discharged from the degasification unit (2) via a first conveying device (8.1) at a negative pressure relative to its original location and in that, if the liquid to be transferred is divided, the first conveying device (8.1) conveys to its target destination the entire liquid which is to be transferred and which is merged downstream of the degasification unit (2).

7. Method according to one of Claims 1 to 5,
**characterised**
**in that** the degasification unit (2) has a top space (2b) which is not filled with liquid, said top space discharging from the degasification unit (2) the liquid supplied to the degasification unit (2) via a second conveying device (8.2) at an excess pressure relative to the target destination for the liquid and in that, if the liquid to be transferred is divided, the second conveying device (8.2) conveys to its target destination the entire liquid which is to be transferred and which is not yet divided upstream of the degasification unit (2).

8. Method according to one of the preceding claims,
**characterised**
**in that** the ratio of the fluid flow conducted via the degasification unit (2) and the fluid flow conducted past said degasification unit, generated in each case from the liquid to be transferred, is determined by the coefficients of pressure loss characterising the respective fluid connection.

9. Method according to Claim 8,
**characterised**
**in that** the coefficients of pressure loss are fixedly predetermined and thus the ratio of the fluid flows is fixed under the respective transfer conditions.

10. Method according to Claim 8,
**characterised**
**in that** at least one coefficient of pressure loss is able to be altered to a limited extent and thus the ratio of the fluid flows is able to be controlled in a variable manner under the respective operating conditions.

11. Method according to one of the preceding claims,
**characterised**
**in that**, upstream of the division and branching off of the liquid to be transferred, the gas bubbles carried therein are detected qualitatively and/or quantitatively.

12. Method according to one of the preceding claims,
**characterised**
**in that** a flow cross section arranged upstream of the degasification unit (2), in particular upstream of the division and branching off of the liquid to be transferred, is reduced steplessly or in discrete steps or steplessly within discrete steps in order to avoid flooding of the degasification unit (2) by the stream of fluid acting thereon.

13. Method according to one of the preceding claims,
**characterised**
**in that** in the measuring line (1), upstream of the division and branching off of the liquid to be transferred, the proportion of gas bubbles carried therein is determined firstly according to the quantity and secondly according to the distribution over the flow cross section under consideration and this information is used for obtaining a representative sample from the quantity of liquid transferred.

14. Device for determining a quantity when transferring a liquid, in particular for carrying out the method according to one of the preceding claims, comprising
• a measuring line (1) which at one end thereof has an inlet opening (E) and at the other end thereof has an outlet opening (A) for the liquid,
• a throughflow-measuring device (4) assigned to the measuring line (1) for measuring a quantity of liquid flowing through the measuring line (1),
• and a degasification unit (2) arranged upstream of the throughflow-measuring device (4) for the degasification of the liquid flowing in the measuring line (1),
**characterised**
• **in that** the measuring line (1) upstream of the degasification unit (2) branches off into an inlet line (1.1) to the degasification unit (2) and at least one bypass line (1.3),
• **in that** the at least one bypass line (1.3) is guided past the degasification unit (2) and is merged with a discharge line (1.2) emerging from the degasification unit (2),
• **in that** the at least one bypass line (1.3) and the discharge line (1.2), downstream of the merging point (1.5) thereof, form a portion of the measuring line (1) in which the throughflow-measuring device (4) is arranged,
• **in that** a gas bubble detection device (3) is arranged in a portion of the measuring line (1) upstream of the branching off point (1.4) of the inlet line (1.1) and the at least one bypass line (1.3),
• and **in that** in each case a shut-off valve (11, 12) is provided in the bypass line (1.3) downstream of the branching off point (1.4) and upstream of the merging point (1.5).

15. Device according to Claim 14,
**characterised**
**in that** a first throttle device (7), which is selectively switchable and variable, is arranged in the measuring line (1) downstream of the throughflow-measuring device (4).

16. Device according to Claim 15,
**characterised**
**in that** the throttle device (7) has a single flow cross section which is variable in a stepless or binary (on/off) manner or in discrete steps or steplessly within discrete steps.

17. Device according to Claim 15,
**characterised**
**in that** the throttle device (7) has at least two binary (on/off) switchable, parallel flow paths with flow cross sections which are fixed, of variable size and stepped in size.

18. Device according to Claim 16 or 17,
**characterised**
**in that** a flow path which is not switchable is provided parallel to the switchable flow paths, the flow cross section of said flow path being designed to be smaller than the smallest switchable flow cross section.

19. Device according to one of the preceding claims,
**characterised**
**in that** a filling line (1.6) branches off from the measuring line (1) downstream of the conveying device (8.1, 8.2), in particular from the pressure pipes thereof or from a pipe region adjacent thereto, said filling line discharging into the bypass line (1.3) upstream of the second shut-off valve (12).

## Revendications

1. Procédé pour la détermination de la quantité lors du transfert d'un liquide, dans lequel
• le liquide est introduit dans une conduite de mesure (1) par un orifice d'entrée (E) et évacué de la conduite de mesure (1) par un orifice de sortie (A), et
• une quantité de liquide traversant la conduite de mesure (1) est déterminée au moyen d'un dispositif de mesure du débit (4) attribué à la conduite de mesure (1),
• dans lequel il est prévu un système de dégazage (2) pour dégazer le liquide s'écoulant dans la conduite de mesure (1) avant d'atteindre le dispositif de mesure du débit (4),
**caractérisé en ce que**
• le système de dégazage (2) est sollicité en continu sur toute la durée du transfert,
• le besoin de dégazer le liquide à transférer est constaté en continu en amont du système de dégazage (2) au moyen d'un dispositif de détection de bulles de gaz (3),
• le liquide à transférer est divisé et bifurqué avant d'atteindre le système de dégazage (2) et, si souhaité, en cas d'absence de besoin de dégazage,
• et la part de liquide à transférer qui n'est pas alimentée vers le système de dégazage (2) est détournée et ajoutée, en aval du système de dégazage (2), au liquide sortant de celui-ci, et le liquide réuni est alimenté vers le dispositif de mesure du débit (4).

2. Procédé selon la revendication 1,
**caractérisé en ce que**
le liquide à transférer est divisé lorsque
• le liquide ne contient pas de bulles de gaz, ou
• du liquide avec une teneur en gaz inférieure à une valeur prédéterminée ou égale à la valeur prédéterminée.

3. Procédé selon la revendication 1 ou 2,
**caractérisé en ce que**
la présence ou l'absence de bulles de gaz dans le liquide à transférer est déterminée et cette information est utilisée pour commander la division du liquide à transférer.

4. Procédé selon la revendication 1 ou 2,
**caractérisé en ce que**
la teneur en gaz dans le liquide à transférer est détectée et cette information est utilisée pour commander la division du liquide à transférer.

5. Procédé selon l'une des revendications 1 à 4,
**caractérisé en ce que**
en cas de division du liquide à transférer, le système de dégazage (2) fournit un débit toujours inférieur à son débit maximal possible sous les conditions de transfert respectives.

6. Procédé selon l'une des revendications précédentes,
**caractérisé en ce que**
le système de dégazage (2) comporte un espace de tête (2b) non rempli de liquide, lequel introduit le liquide évacué du système de dégazage (2) par un premier dispositif de transport (8.1) dans le système de dégazage (2) avec une sous-pression par rapport à son lieu d'origine, et **en ce qu'**en cas de division du liquide à transférer, le premier dispositif de transport (8.1) transporte l'ensemble du liquide à transférer et du liquide réuni derrière le système de dégazage (2) vers son lieu de destination.

7. Procédé selon l'une des revendications 1 à 5,
**caractérisé en ce que**
le système de dégazage (2) comporte un espace de tête (2b) non rempli de liquide, lequel extrait le liquide alimenté vers le système de dégazage (2) par un deuxième dispositif de transport (8.2) hors du système de dégazage (2) avec une surpression par rapport au lieu de destination, et ce qu'en cas de division du liquide à transférer, le deuxième dispositif de transport (8.2) transporte l'ensemble du liquide à transférer et du liquide pas encore divisé devant le système de dégazage (2) vers son lieu de destination.

8. Procédé selon l'une des revendications précédentes,
**caractérisé en ce que**
le rapport entre le flux de liquide passant par le système de dégazage (2) et le flux de liquide détourné de celui-ci, générés respectivement à partir du liquide à transférer, est déterminé par les valeurs de perte de pression caractérisant la liaison fluidique respective.

9. Procédé selon la revendication 8,
**caractérisé en ce que**
les valeurs de perte de pression sont fixement prédéfinies et le rapport entre les flux de fluide est ainsi fixé sous les conditions de transfert respectives.

10. Procédé selon la revendication 8,
**caractérisé en ce que**
au moins une valeur de perte de pression est ajustable et le rapport entre les flux de fluide peut donc être commandé de façon ajustable sous les conditions de fonctionnement respectives.

11. Procédé selon l'une des revendications précédentes,
**caractérisé en ce que**
en amont de la division et de la bifurcation du liquide à transférer, les bulles de gaz incluses dans celui-ci sont détectées de manière qualitative et/ou quantitative.

12. Procédé selon l'une des revendications précédentes,
**caractérisé en ce que**
une section transversale d'écoulement agencée en amont du système de dégazage (2), en particulier en amont de la division et de la bifurcation du liquide à transférer, est réduit sans paliers ou par paliers discrets ou sans paliers dans une plage de paliers discrets, pour éviter une inondation du système de dégazage (2) par le flux de fluide sollicitant celui-ci.

13. Procédé selon l'une des revendications précédentes,
**caractérisé en ce que**
dans la conduite de mesure (1), en amont de la division et de la bifurcation du liquide à transférer, la part de bulles de gaz embarquées dans celui-ci est déterminée d'une part selon sa quantité et d'autre part selon la répartition sur la section transversale d'écoulement, et ces informations sont utilisées pour l'obtention d'un échantillon représentatif à partir de la quantité de liquide transférée.

14. Dispositif pour la détermination de la quantité lors du transfert d'un liquide, en particulier pour l'exécution du procédé selon l'une des revendications précédentes, avec
• une conduite de mesure (1) comportant un orifice d'entrée (E) à l'une de ses extrémités et un orifice de sortie (A) à l'autre de ses extrémités, pour le liquide,
• un dispositif de mesure du débit (4) attribué à la conduite de mesure (1) pour mesurer une quantité de liquide traversant la conduite de mesure (1),
• et un système de dégazage (2) agencé en amont du dispositif de mesure du débit (4), pour le dégazage du liquide s'écoulant dans la conduite de mesure (1), **caractérisé en ce que**
• la conduite de mesure (1) se divise en amont du système de dégazage (2) en une conduite d'arrivée (1.1) vers le système de dégazage (2) et au moins une conduite de dérivation (1.3),
• l'au moins une conduite de dérivation (1.3) passe devant le système de dégazage (2) et rejoint une conduite d'évacuation (1.2) sortant du système de dégazage (2),
• en aval de leur point de jonction (1.5), l'au moins une conduite de dérivation (1.3) et la conduite d'évacuation (1.2) forment une section de la conduite de mesure (1), dans laquelle est agencé le dispositif de mesure du débit (4),
• un dispositif de détection de bulles de gaz (3) est agencé dans la section de la conduite de mesure (1), en amont du point de bifurcation (1.4) entre la conduite d'arrivée (1.1) et l'au moins une conduite de dérivation (1.3), et
• une soupape d'arrêt (11, 12) est prévue dans la conduite de dérivation (1.3), respectivement en aval du point de bifurcation (1.4) et en amont du point de jonction (1.5).

15. Dispositif selon la revendication 14,
**caractérisé en ce que**
un premier dispositif d'étranglement (7) modifiable et commutable au choix est agencé dans la conduite de mesure, en aval du dispositif de mesure du débit (4).

16. Dispositif selon la revendication 15,
**caractérisé en ce que**
le dispositif d'étranglement (7) comporte une seule section transversale d'écoulement sans paliers ou binaire (ouvert/fermé) ou à paliers discrets ou modifiable sans paliers dans une plage de paliers discrets,

17. Dispositif selon la revendication 15,
**caractérisé en ce que**
le dispositif d'étranglement (7) comporte au moins deux voies d'écoulement parallèles, commutables et binaires (ouvert/fermé), avec des sections transversales fixes, de différentes tailles, étagées dans la taille.

18. Dispositif selon la revendication 16 ou 17,
**caractérisé en ce que**
parallèlement aux voies d'écoulement commutables, il est prévu une voie d'écoulement non commutable, dont la section transversale d'écoulement est conçue inférieure à la plus petite section transversale d'écoulement commutable.

19. Dispositif selon l'une des revendications précédentes,
**caractérisé en ce que**
une conduite de remplissage (1.6) bifurque de la conduite de mesure (1), en aval du dispositif de transport (8.1, 8.2), en particulier de sa tubulure de pression ou d'une région de conduite consécutive à celle-ci, laquelle débouche dans la conduite de dérivation (1.3), en amont de la deuxième soupape d'arrêt (12).
